# EUROPEAN PATENT SPECIFICATION

(11) **EP 3 930 383 B1**
(45) Date of publication and mention of the grant of the patent: **31.12.2025**
(21) Application number: 19927401.0
(22) Date of filing: 30.04.2019
(51) Int. Cl.: H04W 36/14, H04W 72/04, H04W 36/00

(54) **COMMUNICATION METHOD, COMMUNICATION DEVICE AND NETWORK DEVICE**
KOMMUNIKATIONSVERFAHREN, KOMMUNIKATIONSVORRICHTUNG UND NETZWERKVORRICHTUNG
PROCÉDÉ DE COMMUNICATION, DISPOSITIF DE COMMUNICATION ET DISPOSITIF DE RÉSEAU

(43) Date of publication of application: 29.12.2021
(73) Proprietor: Huawei Technologies Co., Ltd., Shenzhen, Guangdong 518129 (CN)
(72) Inventor: LUO, Zhihu, Shenzhen, Guangdong 518129 (CN); BI, Wenping, Shenzhen, Guangdong 518129 (CN); JIN, Zhe, Shenzhen, Guangdong 518129 (CN); CHENG, Xingqing, Shenzhen, Guangdong 518129 (CN); MI, Xiang, Shenzhen, Guangdong 518129 (CN); SU, Yuwan, Shenzhen, Guangdong 518129 (CN)
(74) Representative: Maiwald GmbH
(86) International application number: PCT/CN2019/085349
(87) International publication number: WO 2020/220334

(56) References cited:
- WO-A1-2018/128019
- WO-A1-2018/128022
- WO-A1-2018/128022
- CN-A- 108 282 833
- US-A1- 2016 050 599
- US-A1- 2018 242 271
- US-A1- 2019 110 319
- ERICSSON: "RRC configuration in LTE-NR tight-interworking", vol. RAN WG2, no. Reno, Nevada, USA; 20161114 - 20161118, 13 November 2016 (2016-11-13), XP051177941, Retrieved from the Internet <URL:http://www.3gpp.org/ftp/Meetings_3GPP_SYNC/RAN2/Docs/> [retrieved on 20161113]
- VIVO: "RACH configuration for BWP", vol. RAN WG2, no. Vancouver, Canada; 20180122 - 20180126, 12 January 2018 (2018-01-12), XP051386388, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### TECHNICAL FIELD

Embodiments of this application relate to the field of communication technologies, and in particular, to a communication method, a communication device, and a network device.

### BACKGROUND

With development of communication technologies, there are increasing types of communication systems, for example, a long term evolution (LTE) communication system, a new radio (NR) communication system, an internet of things (IoT) communication system, a massive machine-type communications (mMTC) system, and an enhanced machine type communication (eMTC) system, based on requirements such as different application scenarios, system capacities, coverage requirements, transmission reliability, transmission delays, and communication costs.

The IoT communication system is "an internet in which things are connected to each other", extends a user end of the internet to any object, to perform information exchange and communication. Such a communication manner is also referred to as machine type communication (MTC), and a communication node may be referred to as an MTC terminal. Typical internet of things application includes a smart grid, smart agriculture, smart transportation, smart household, environment detection, and the like. The 3rd generation partnership project (3GPP), a mobile communication standardization organization, used a new research project to research a method for supporting, in a cellular network, an internet of thing having extremely low complexity and low costs. In addition, a narrowband internet of things (NB-IoT) project was initiated. The eMTC system and an evolved system thereof are communication systems derived from LTE. The eMTC system and the evolved system thereof operate in a frequency band of the LTE system, and usually occupy a relatively small operating bandwidth.

How a terminal device facing a plurality of types of communication systems communicates with different communication systems becomes an urgent problem to be resolved.

US 2018/242271 A1 describes the coordination of simultaneous multi-RAT camping in in a wireless communication network that provides radio access for a terminal device via at least a first and second wireless radio access operating with different radio access technologies. The multi-RAT camping is achieved by transmitting, by a network node, an indication regarding a set of camping areas, CAs, including a first set of camping areas being associated with the first RAT and a second set of camping areas being associated with the second RAT; performing, by the terminal device, camping in a coverage area defined based on the set of CAs; and updating, by the terminal device, the communication network with a geographic location of the terminal device a) when the terminal device enters a new coverage area being different from the coverage area defined by both the first and second set of CAs as a first mechanism, or b) when the terminal device enters a new coverage area being different from the coverage area defined by one of the first and second set of CAs as a second mechanism.

ERICSSON: "RRC configuration in LTE-NR tight-interworking", 3GPP DRAFT; R2-168291, vol. RAN WG2, no. Reno, Nevada, USA; 20161114 - 20161118, 13 November 2016, presents and proposes how RRC configuration should be handled overall for LTE-NR tight-interworking.

US 2019/110319 A1 provides techniques for ordering a plurality of potential base stations to serve a user equipment on a supplemental uplink and providing random access channel (RACH) configuration parameters for each of the plurality of potential base stations to the user equipment. Certain aspects provide a method for wireless communication. The method generally includes communicating, by a user equipment (UE), with a first base station (BS) on a downlink on a first frequency band. The method further includes receiving, by the UE from the first BS, a list comprising RACH configuration parameters for each of a plurality of BSs. The method further includes selecting a second BS from the plurality of BSs based on an ordering of the plurality of BSs in the list and performing a RACH procedure with the second BS.

WO 2018/128022 A1 describes that a second RAN mode associated with a second RAT sends a wireless resource setting of the second RAT to a wireless terminal via a first RAN node associated with a first RAT. The wireless resource setting explicitly or implicitly indicates at least one numerology which is different from a reference numerology among a plurality of numerologies supported by the second RAT.

### SUMMARY

The invention is defined by the appended set of claims. Embodiments of this application provide a communication method, a communication device, and a network device, to resolve a communication problem of facing a plurality of types of communication systems, and in particular, to resolve a communication problem caused when an NR communication system and a cellular internet of things (CIoT) communication system are simultaneously operated.

According to a first aspect of the present invention, there is provided a communication method, including: receiving, by a terminal device, a first access parameter and a second access parameter from a first network device in a first communication system; and accessing, by the terminal device, the first communication system based on the first access parameter; switching, by the terminal device, from the first communication system to a second communication system based on the second access parameter when satisfying a switching condition of switching from the first communication system to the second communication system; or accessing, by the terminal device, the first communication system and the second communication system based on the first access parameter and the second access parameter. The second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system. If the second communication system is a new radio NR communication system, the parameter set further comprises configuration information of remaining minimum system information RMSI; or if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

The communication method provided in the first aspect is applicable to a scenario in which the terminal device supports two communication systems and the two communication systems are operated in a same area. The terminal device may obtain, by using one of the communication systems, access parameters for respectively accessing the two communication systems. The terminal device can implement simultaneous access to the two communication systems or fast switching between the systems, thereby avoiding problems of an increased delay and increased power consumption that are caused by blind frequency scanning, resolving a communication problem of facing a plurality of types of communication systems, and in particular, resolving a communication problem caused when an NR communication system and a CIoT communication system are simultaneously operated.

Optionally, in a possible implementation of the first aspect, a system bandwidth of the first communication system is greater than a system bandwidth of the second communication system; and the switching condition of switching from the first communication system to the second communication system may include at least one of the following conditions: a channel quality measurement value of the terminal device in the first communication system is less than a first preset threshold; a quantity of repetitions of a control channel when the terminal device satisfies a preset BLER in the first communication system is greater than a third preset threshold; the terminal device detects, in the first communication system, that a radio link failure occurs; the terminal device obtains no downlink control information through monitoring within preset duration; and the terminal device receives a first message sent by the first network device in the first communication system, where the first message includes indication information, and the indication information is used to indicate the terminal device to switch from the first communication system to the second communication system.

According to a second aspect of the present invention, there is provided a communication method, including: determining, by a first network device in a first communication system, a first access parameter and a second access parameter; sending, by the first network device, the first access parameter and the second access parameter to a terminal device; receiving, by the first network device from the terminal device, a first message used to access the first communication system; sending, by the first network device, a response message corresponding to the first message to the terminal device; and sending, by the first network device, a second message to the terminal device, where the second message includes indication information, and the indication information is used to indicate the terminal device to switch from the first communication system to a second communication system. The second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system. if the second communication system is a new radio NR communication system, the parameter set further comprises configuration information of remaining minimum system information RMSI; or if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

According to a third aspect of the present invention, there is provided a communication device, including: a receiving module, configured to receive a first access parameter and a second access parameter from a first network device in a first communication system; and a processing module, configured to access the first communication system based on the first access parameter; configured to switch from the first communication system to a second communication system based on the second access parameter when satisfying a switching condition of switching from the first communication system to the second communication system; or configured to access the first communication system and the second communication system based on the first access parameter and the second access parameter. The second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system. If the second communication system is a new radio NR communication system, the parameter set further comprises configuration information of remaining minimum system information RMSI; or if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

Optionally, in a possible implementation of the third aspect, a system bandwidth of the first communication system is greater than a system bandwidth of the second communication system; and the switching condition of switching from the first communication system to the second communication system includes at least one of the following conditions: a channel quality measurement value of the communication device in the first communication system is less than a first preset threshold; a quantity of repetitions of a control channel when the communication device satisfies a preset BLER in the first communication system is greater than a third preset threshold; the communication device detects, in the first communication system, that a radio link failure occurs; the communication device obtains no downlink control information through monitoring within preset duration; and the communication device receives a first message sent by the first network device in the first communication system, where the first message includes indication information, and the indication information is used to indicate the communication device to switch from the first communication system to the second communication system.

According to a fourth aspect of the present invention, there is provided a network device, including a processing module, configured to determine a first access parameter and a second access parameter; a sending module, configured to send the first access parameter and the second access parameter to a terminal device; and a receiving module, configured to receive, from the terminal device, a first message used to access a first communication system, where the sending module is further configured to send a response message corresponding to the first message to the terminal device; and the sending module is further configured to send a second message to the terminal device, where the second message includes indication information, and the indication information is used to indicate the terminal device to switch from the first communication system to a second communication system. The second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system. If the second communication system is a new radio NR communication system, the parameter set further comprises configuration information of remaining minimum system information RMSI; or if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

In a possible implementation, the channel quality measurement value may include an RSRP, RSRQ, an NRSRP, NRSRQ, a CQI, an SNR, and an SINR.

According to a seventh aspect, an embodiment of this application provides a computer-readable storage medium. The computer-executable storage medium stores computer-executable instructions. When the computer-executable instructions are executed by at least one processor, the communication method provided in the first aspect and any implementation of the first aspect is implemented, or the communication method provided in the second aspect and any implementation of the second aspect is implemented.

### BRIEF DESCRIPTION OF DRAWINGS

FIG. 1(a), FIG. 1(b), and FIG. 1(c) are schematic diagrams of application scenarios to which an embodiment of this application is applicable;
FIG. 2 is a schematic diagram of relative locations of communication frequency bands of an NR communication system, an NB-IoT communication system, and an eMTC communication system;
FIG. 3 is a network architectural diagram of a communication system to which an embodiment of this application is applicable;
FIG. 4 is a flowchart of an implementation of a communication method according to an embodiment of this application;
FIG. 5 is a schematic diagram of a frame number offset between an NR communication system and an NB-IoT communication system;
FIG. 6 is a schematic diagram of a frame number offset between an NR communication system and an eMTC communication system;
FIG. 7 is a flowchart of another implementation of a communication method according to an embodiment of this application;
FIG. 8 is a message exchange diagram of still another implementation of a communication method according to an embodiment of this application;
FIG. 9 is a message exchange diagram of still another implementation of a communication method according to an embodiment of this application;
FIG. 10 is a message exchange diagram of still another implementation of a communication method according to an embodiment of this application;
FIG. 11 is a message exchange diagram of still another implementation of a communication method according to an embodiment of this application;
FIG. 12 is a schematic diagram of a structure of a terminal device according to an embodiment of this application;
FIG. 13 is a schematic diagram of a structure of a network device according to an embodiment of this application;
FIG. 14 is a schematic diagram of a structure of another terminal device according to an embodiment of this application; and
FIG. 15 is a schematic diagram of a structure of another network device according to an embodiment of this application.

### DESCRIPTION OF EMBODIMENTS

The following describes the embodiments of this application with reference to the accompanying drawings.

A communication method provided in the embodiments of this application may be applied to an LTE communication system, a subsequently evolved communication system of the LTE communication system, an NR communication system, and another communication system, for example, a CIoT communication system. Optionally, the CIoT communication system may include but is not limited to an NB-IoT communication system and an eMTC communication system. The eMTC communication system may also be referred to as a long term evolution machine type communication (LTE-M or LTE-MTC) system. The communication system may include a network device and a terminal device. Uplink and downlink communication may be performed between the network device and the terminal device. The terminal device may send uplink data to the network device. Correspondingly, the network device may receive the uplink data sent by the terminal device. The network device may send downlink data to the terminal device. Correspondingly, the terminal device may receive the downlink data sent by the network device.

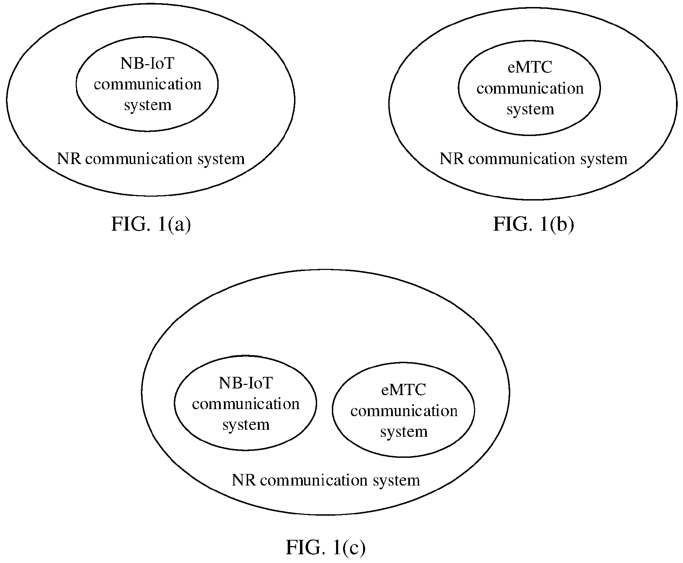

In the embodiments of this application, at least two communication systems are operated within an area range in which the terminal device is located, and the terminal device has a capability of accessing the at least two communication systems and a capability of switching between the at least two communication systems. System bandwidths of the at least two communication systems are different. The system bandwidth may reflect coverage and/or coverage strength of the communication system. Optionally, the system bandwidth may be a bandwidth of a carrier in the communication system. For example, FIG. 1(a), FIG. 1(b), and FIG. 1(c) are schematic diagrams of application scenarios to which an embodiment of this application is applicable. As shown in FIG. 1(a), the at least two communication systems may include an NR communication system and an NB-IoT communication system. A system bandwidth of the NR communication system is greater than a system bandwidth of the NB-IoT communication system. As shown in FIG. 1(b), the at least two communication systems may include an NR communication system and an eMTC system. A system bandwidth of the NR communication system is greater than a system bandwidth of the eMTC system. As shown in FIG. 1(c), the at least two communication systems may include an NR communication system, an NB-IoT communication system, and an eMTC system. Both a system bandwidth of the NB-IoT communication system and a system bandwidth of the eMTC system are less than a system bandwidth of the NR communication system. Generally, coverage of the NB-IoT communication system and coverage of the eMTC system are smaller than coverage of the NR communication system, but coverage strength of the NB-IoT communication system and coverage strength of the eMTC system are better than coverage strength of the NR communication system.

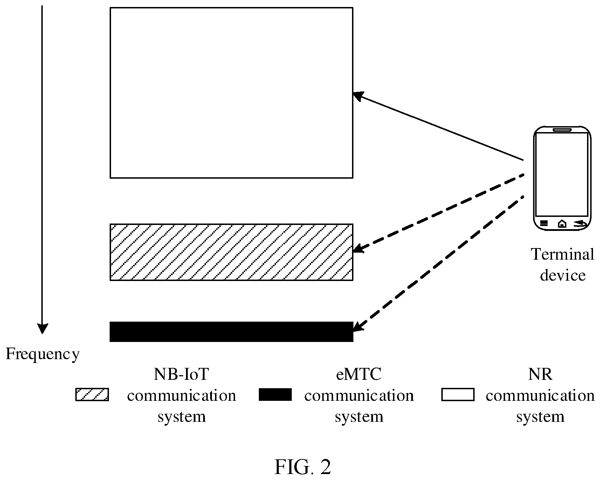

A communication frequency band of each communication system is not limited in the embodiments of this application. For example, FIG. 2 is a schematic diagram of relative locations of communication frequency bands of an NR communication system, an NB-IoT communication system, and an eMTC communication system. As shown in FIG. 2, a communication frequency band of the NR communication system is higher than a communication frequency band of the NB-IoT communication system. The communication frequency band of the NB-IoT communication system is higher than a communication frequency band of the eMTC communication system. This is merely an example herein, and a relative location relationship between actually operated frequency bands of the NR communication system, the NB-IoT communication system, and the eMTC communication system is not limited.

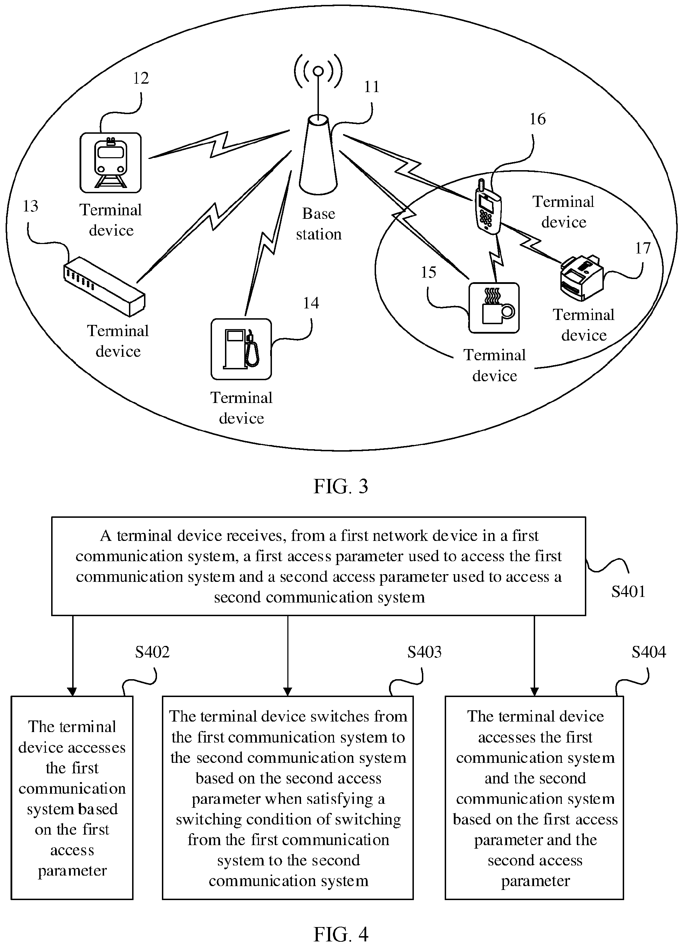

The following describes the network device and the terminal device in the communication system with reference to FIG. 3. As shown in FIG. 3, the communication system may include a base station 11 and a terminal device 12 to a terminal device 17. A communication system may include the base station 11 and the terminal device 12 to the terminal device 17. In the communication system, the base station 11 may communicate with the terminal device 12 to the terminal device 17. In this case, the base station 11 is used as a network device, and the terminal device 12 to the terminal device 17 are used as terminal devices. In addition, a communication system may alternatively include the terminal device 15, the terminal device 16, and the terminal device 17. In the communication system, the terminal device 16 may communicate with the terminal device 15 and the terminal device 17. In this case, the terminal device 16 is used as a network device, and the terminal device 15 and the terminal device 17 are used as terminal devices.

It should be noted that the network device in the embodiments of this application may be any device that has a wireless network resource management function or various wireless access points, for example, an evolved NodeB (eNB or eNodeB), a relay station, or an access point in the LTE communication system, or a gNodeB (gNB) or a wireless transceiver device (NX) in the NR communication system. This is not limited in the embodiments of this application.

It should be noted that the terminal device in the embodiments of this application may also be referred to as a communication device, and may be a mobile phone, a tablet computer, a handheld device, a vehicle-mounted device, a wearable device, and a computing device that have a wireless connection function, user equipment (UE), mobile stations (MS), terminals (terminal) that are in various forms, UE that performs an MTC service, bandwidth-reduced low-complexity user equipment (BL UE), non-BL UE, coverage enhancement user equipment (CE UE), or the like. This is not limited in the embodiments of this application.

The communication method provided in the embodiments of this application is used to resolve a technical problem of how the terminal device communicates with different communication systems when facing a plurality of types of communication systems, and in particular, facing the NR communication system and the CIoT communication system.

Specific embodiments are used below to describe in detail the technical solutions in this application. The following specific embodiments may be combined with each other, and a same or similar concept or process may not be described repeatedly in some embodiments.

It should be noted that the terms "first", "second", "third", "fourth", and the like (if existent) in the embodiments of this application are intended to distinguish between similar objects but do not necessarily indicate a specific order or sequence.

FIG. 4 is a flowchart of an implementation of a communication method according to an embodiment of this application. The communication method provided in this embodiment may be executed by a terminal device. As shown in FIG. 4, the communication method provided in this embodiment may include the following steps.

S401: The terminal device receives, from a first network device in a first communication system, a first access parameter used to access the first communication system and a second access parameter used to access a second communication system.

A system bandwidth of the first communication system is different from a system bandwidth of the second communication system.

Specifically, the terminal device may receive the first access parameter and the second access parameter that are sent by the first network device in the first communication system. A current connection status of the terminal device is not limited in this embodiment. Optionally, in an application scenario, the terminal device is currently in an idle state, and the terminal device camps on the first communication system, but has not yet accessed the first communication system. Optionally, in another application scenario, the terminal device is currently in a connected state, and the terminal device has accessed the first communication system, and may communicate with the first network device in the first communication system.

The first access parameter is used to access the first communication system, and the second access parameter is used to access the second communication system. Specific content separately included in the first access parameter and the second access parameter is not limited in this embodiment. The system bandwidth of the first communication system is different from the system bandwidth of the second communication system. Optionally, a system bandwidth is a bandwidth of a carrier in a communication system. Because the terminal device may obtain the related parameters for separately accessing the two different communication systems, the terminal device may determine a subsequent communication procedure based on the first access parameter, the second access parameter, and the current connection status of the terminal device. For details, refer to S402 to S404.

It should be noted that an implementation in which the terminal device receives the first access parameter and the second access parameter from the first network device in the first communication system is not limited in this embodiment.

Optionally, the terminal device may receive, from the first network device in the first communication system, a message that carries the first access parameter and the second access parameter. In this implementation, the first access parameter and the second access parameter are carried in a same message, and the terminal device may simultaneously receive the first access parameter and the second access parameter. It should be noted that a name, a sending occasion, a quantity of sending times, and the like of the message are not limited in this embodiment. For example, the message may be a system message of the first communication system.

Optionally, the terminal device may receive, from the first network device in the first communication system, a first message that carries the first access parameter and a second message that carries the second access parameter. In this implementation, the first access parameter and the second access parameter may be carried in different messages. It should be noted that the first message and the second message are only used to distinguish between the different messages. Names, sending occasions, quantities of sending times, and the like of the first message and the second message are not limited in this embodiment. For example, the first message may be a system message of the first communication system. The second message may be a radio resource control (RRC) message sent by the first network device in the first communication system after the terminal device accesses the first communication system.

It should be noted that specific types of the first communication system and the second communication system are not limited in this embodiment. Optionally, the system bandwidth of the first communication system is greater than the system bandwidth of the second communication system. For example, the first communication system may be an NR communication system, and the second communication system may be an NB-IoT communication system or an eMTC communication system. For another example, the first communication system may be an eMTC communication system, and the second communication system may be an NB-IoT communication system. Optionally, the system bandwidth of the first communication system is less than the system bandwidth of the second communication system. For example, the first communication system may be an NB-IoT communication system or an eMTC communication system, and the second communication system may be an NR communication system.

S402: The terminal device accesses the first communication system based on the first access parameter.

Specifically, in this step, the terminal device may be currently in the idle state, and neither access the first communication system nor access the second communication system. The terminal device may access the first communication system based on the first access parameter. For a specific access process, refer to access processes of existing communication systems. Principles are similar.

For example, the first communication system is an NR communication system, and the terminal device may access the NR communication system based on the first access parameter used to access the NR communication system.

For another example, the first communication system is an NB-IoT communication system or an eMTC communication system, and the terminal device may access the NB-IoT communication system or the eMTC communication system based on the first access parameter used to access the NB-IoT communication system or the eMTC communication system.

Optionally, the first access parameter and the second access parameter may be carried in the same message. Optionally, the message may be the system message of the first communication system.

It can be learned that, when the terminal device determines to access the first communication system from the idle state, because the terminal device may obtain the second access parameter for accessing the second communication system, scanning by the terminal device in a supported fullband is avoided, and power consumption of the terminal device is reduced. In addition, the terminal device can quickly switch to the second communication system subsequently based on the second access parameter, thereby shortening a switching time length and improving service quality.

The following uses a four-step random access process in an LTE communication system or an NR communication system as an example to describe a process in which the terminal device accesses a network device. The random access process may include the following steps.

Step 1: The terminal device sends a random access request to the network device, where the random access request may also be referred to as a message 1 (Msg1), and includes a random access preamble (preamble).

Correspondingly, the network device receives the preamble, learns that the terminal device requests access, and further performs step 2.

Step 2: The network device sends a random access response (RAR) message to the terminal device, where the RAR message may also be referred to as a message 2 (Msg2).

Step 3: The terminal device sends, based on a RAR and on an uplink resource allocated by the network device, a message 3 (Msg3) to the network device by using a timing advance indicated by the network device.

Step 4: The network device sends a message 4 (Msg4) to the terminal device.

Optionally, the NR communication system further involves a two-step random access process. Compared with the four-step random access process, the two-step random access process further reduces a quantity of times of message exchange between the terminal device and the network device. In the two-step random access process, the random access process may include the following steps.

Step a: The terminal device sends a message A to the network device. The message A may include at least one parameter in step 1 and step 3.

Step b: The network device sends a message B to the terminal device. The message B may include at least one parameter in step 2 and step 4.

It should be noted that names of the message 1, the message 2, the message 3, the message 4, the message A, and the message B are not limited in this embodiment.

S403: The terminal device switches from the first communication system to the second communication system based on the second access parameter when satisfying a switching condition of switching from the first communication system to the second communication system.

Specifically, in this step, the terminal device may be currently in the connected state, and has accessed the first communication system, but has not accessed the second communication system. The terminal device determines whether the switching condition of switching from the first communication system to the second communication system is satisfied. The terminal device may switch from the first communication system to the second communication system based on the second access parameter when satisfying the switching condition of switching from the first communication system to the second communication system.

For example, the first communication system is an NR communication system, and the second communication system is an NB-IoT communication system or an eMTC communication system. The terminal device accesses the NR communication system. The terminal device may switch from the NR communication system to the NB-IoT communication system or the eMTC communication system when satisfying a switching condition of switching from the NR communication system to the NB-IoT communication system or the eMTC communication system, to satisfy a service requirement.

For another example, the first communication system is an NB-IoT communication system or an eMTC communication system, and the second communication system is an NR communication system. The terminal device accesses the NB-IoT communication system or the eMTC communication system. The terminal device may switch from the NB-IoT communication system or the eMTC communication system to the NR communication system when satisfying a switching condition of switching from the NB-IoT communication system or the eMTC communication system to the NR communication system, to satisfy a service requirement.

Optionally, the first access parameter and the second access parameter may be carried in the same message, or may be carried in the different messages.

It can be learned that, because the terminal device may obtain the second access parameter for accessing the second communication system, when the terminal device determines to switch from the first communication system to the second communication system, the terminal device may quickly implement inter-system switching based on the obtained second access parameter, thereby shortening the switching time length and satisfying the service requirement.

S404: The terminal device accesses the first communication system and the second communication system based on the first access parameter and the second access parameter.

Specifically, in this step, the terminal device may be currently in the idle state, and neither access the first communication system nor access the second communication system. The terminal device may access the first communication system based on the first access parameter, and may further access the second communication system based on the second access parameter, so that the terminal device simultaneously accesses two different communication systems. Optionally, the first network device in the first communication system accessed by the terminal device may be a primary network device of the terminal device, and a second network device in the second communication system accessed by the terminal device may be a secondary network device of the terminal device.

For example, the first communication system is an NR communication system, and the second communication system is an NB-IoT communication system or an eMTC communication system. The terminal device is in the idle state. The terminal device may access the first network device in the NR communication system based on the first access parameter used to access the NR communication system. The first network device is the primary network device of the terminal device. The terminal device may access the second network device in the NB-IoT communication system or the eMTC communication system based on the second access parameter used to access the NB-IoT communication system or the eMTC communication system. The second network device is the secondary network device of the terminal device.

For another example, the first communication system is an NB-IoT communication system or an eMTC communication system, and the second communication system is an NR communication system. The terminal device is in the idle state. The terminal device may access the first network device in the NB-IoT communication system or the eMTC communication system based on the first access parameter used to access the NB-IoT communication system or the eMTC communication system. The first network device is the primary network device of the terminal device. The terminal device may access the second network device in the NR communication system based on the second access parameter used to access the NR communication system. The second network device is the secondary network device of the terminal device.

Optionally, the first access parameter and the second access parameter may be carried in the same message, or may be carried in the different messages.

It can be learned that, because the terminal device may obtain the second access parameter for accessing the second communication system, after the terminal device accesses the first network device in the first communication system, the terminal device may access a second communication device in the second communication system based on the obtained second access parameter, thereby simultaneously accessing two communication systems, to fully use advantages of the two communication systems, and satisfy a service requirement.

This embodiment provides the communication method, applicable to a scenario in which the terminal device supports two communication systems and the two communication systems are operated in a same area. Because the terminal device may obtain, by using one of the communication systems, access parameters for respectively accessing the two communication systems, the terminal device can implement simultaneous access to the two communication systems or fast switching between the systems, thereby avoiding problems of an increased delay and increased power consumption that are caused by blind frequency scanning, resolving a communication problem of facing a plurality of types of communication systems, and in particular, resolving a communication problem caused when an NR communication system and a CIoT communication system are simultaneously operated.

Optionally, specific content included in the first access parameter is not limited in this embodiment. In S401, the terminal device may receive the first access parameter sent by the first network device in the first communication system. For the first communication system, the first access parameter is an access parameter in the system. For details, refer to a definition, in an existing communication system, of the access parameter in the system. For example, for an access parameter in the NR communication system, refer to descriptions in 3GPP technical specification (TS) 38.331. For the NB-IoT communication system or the eMTC communication system, refer to descriptions in 3GPP TS 36.331. Optionally, the first access parameter may include frequency band information of the first communication system and/or frequency information of the first communication system. Optionally, the first access parameter may further include configuration information of a random access channel of the first communication system. Random access channels may vary with different types of communication systems. For example, for the NR communication system, the NB-IoT communication system, or the eMTC communication system, the random access channel may be a random access channel (RACH). If the first communication system is the NR communication system, the first access parameter further includes configuration information of remaining minimum system information (RMSI). If the first communication system is the NB-IoT communication system or the eMTC communication system, the first access parameter further includes operation mode information of the first communication system.

The following describes the operation mode information by using the NB-IoT communication system as an example. For an NB-IoT, a bandwidth of a carrier may be 180 kHz, and the NB-IoT can work in three operation modes: a standalone operation mode, a guard band operation mode, and an in-band operation mode. In the standalone operation mode, a standalone frequency band may be used, for example, one or more carriers of a global system for mobile communications (GSM) network are used to transmit the NB-IoT. In the guard band operation mode, one or more resource blocks that are not used in a carrier guard band of an evolved-UMTS terrestrial radio access (E-UTRA) network may be used to transmit the NB-IoT. A bandwidth of the resource block may be 180 kHz. In the in-band operation mode, one or more resource blocks in a normal E-UTRA carrier may be used to transmit the NB-IoT. A bandwidth of the resource block may be 180 kHz.

Optionally, specific content included in the second access parameter is not limited in this embodiment. In S401, the terminal device may receive the second access parameter sent by the first network device in the first communication system. For the first communication system, the second access parameter is an access parameter in an inter-system. For the second access parameter, refer to definitions of access parameters in various existing communication systems.The second access parameter includes frequency band information of the second communication system and/or frequency information of the second communication system. Optionally, the second access parameter may further include at least one in the following parameter set: cell identity information of the second communication system, information used to indicate whether the second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system. Optionally, if the second communication system is an NR communication system, the parameter set may further include configuration information of RMSI. Optionally, if the second communication system is an NB-IoT communication system or an eMTC communication system, the parameter set may further include operation mode information of the second communication system.

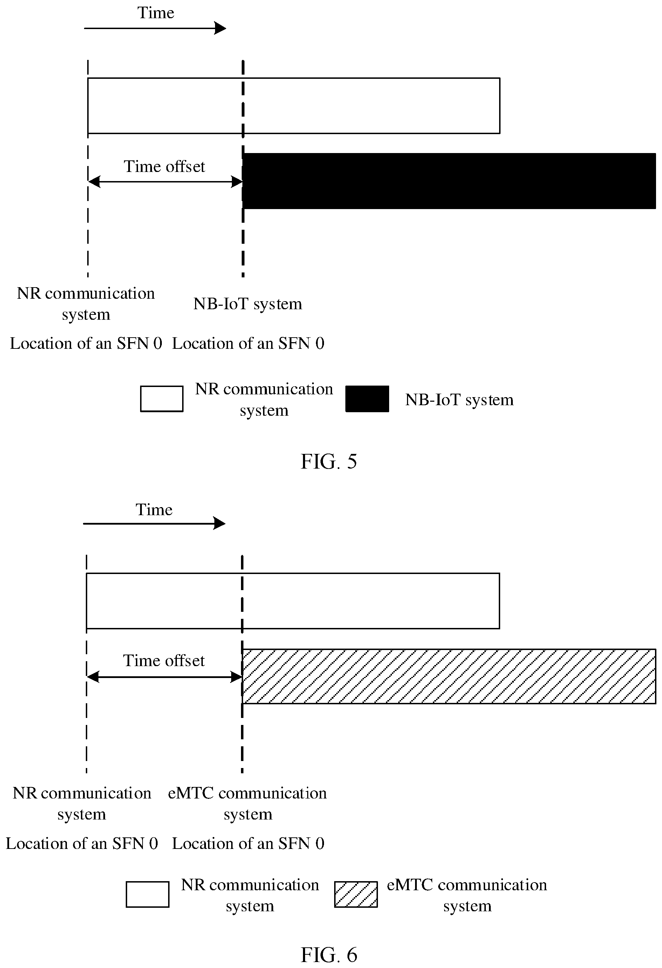

The following describes an example of the frame number offset between the second communication system and the first communication system with reference to FIG. 5 and FIG. 6. The information about the frame number offset may reflect a quantity difference of radio frames between the first communication system and the second communication system in time domain. The information about the frame number offset may be in a unit of a radio frame of the first communication system or the second communication system.

FIG. 5 is a schematic diagram of a frame number offset between an NR communication system and an NB-IoT communication system. As shown in FIG. 5, information about the frame number offset between the NR communication system and the NB-IoT communication system is used to indicate a time offset between a radio frame number 0 (an SFN 0) of the NR communication system and a radio frame number 0 (an SFN 0) of the NB-IoT communication system.

Similarly, FIG. 6 is a schematic diagram of a frame number offset between an NR communication system and an eMTC communication system. As shown in FIG. 6, a time offset between a radio frame number 0 (an SFN 0) of the NR communication system and a radio frame number 0 (an SFN 0) of the eMTC communication system may be defined as the frame number offset between the NR communication system and the eMTC communication system. Information about the frame number offset between the NR communication system and the eMTC communication system is used to indicate the time offset.

It should be noted that a frame number, a subframe number, and a slot are all units used to divide time domain time in a communication system. Principles of the information about the frame number offset between the second communication system and the first communication system, the information about the subframe number offset between the second communication system and the first communication system, and the information about the slot offset between the second communication system and the first communication system are similar. The information about the subframe number offset may reflect a quantity difference of subframes between the first communication system and the second communication system in time domain. The information about the subframe number offset may be in a unit of a subframe of the first communication system or the second communication system. The information about the slot offset may reflect a quantity difference of slots between the first communication system and the second communication system in time domain. The information about the time domain offset may be in a unit of a slot of the first communication system or the second communication system.

For S401 and S403, the following describes the switching condition of switching from the first communication system to the second communication system.

In an application scenario, the system bandwidth of the first communication system may be greater than the system bandwidth of the second communication system. For example, the first communication system is an NR communication system, and the second communication system is an NB-IoT communication system or an eMTC communication system. Alternatively, the first communication system is an eMTC communication system, and the second communication system is an NB-IoT system.

Optionally, in an implementation, the switching condition of switching from the first communication system to the second communication system may include: A channel quality measurement value of the terminal device in the first communication system is less than a first preset threshold.

Specifically, the terminal device accesses the first communication system, and the channel quality measurement value in the first communication system may be measured. A larger channel quality measurement value indicates better channel quality and better coverage of the first communication system, and the terminal device may continue to access the first communication system. When the channel quality measurement value is less than the first preset threshold, it indicates that channel quality is relatively poor, coverage of the first communication system is relatively poor, and the terminal device needs to switch to the second communication system. In this case, because the terminal device has obtained the second access parameter used to access the second communication system, the terminal device may quickly switch to the second communication system.

Implementations of the channel quality measurement value are not limited in this embodiment, and may vary with different communication systems. Optionally, the channel quality measurement value may include a reference signal received power (RSRP), reference signal received quality (RSRQ), a narrowband reference signal received power (NRSRP), narrowband reference signal received quality (NRSRQ), channel quality information (CQI), a signal to noise ratio (SNR), and a signal to interference plus noise ratio (signal to interference plus noise ratio, SINR). Optionally, each channel quality measurement value corresponds to a respective first preset threshold. A specific value of the first preset threshold is not limited in this embodiment.

Optionally, the first preset threshold may be configured by the first network device in the first communication system. An implementation in which the terminal device obtains the first preset threshold is not limited in this embodiment. For example, after accessing the first network device in the first communication system, the terminal device may receive an RRC message sent by the first network device in the first communication system, where the RRC message includes the first preset threshold.

Optionally, in another implementation, the switching condition of switching from the first communication system to the second communication system may include: A quantity of repetitions of a control channel when the terminal device satisfies a preset block error rate (block error rate, BLER) in the first communication system is greater than a third preset threshold.

Specifically, a larger quantity of repetitions of the control channel when the preset BLER is satisfied indicates poorer channel quality. When the quantity of repetitions is greater than the third preset threshold, the terminal device needs to switch to the second communication system. In this case, because the terminal device has obtained the second access parameter used to access the second communication system, the terminal device may quickly switch to the second communication system. It should be noted that a value of the preset BLER and a specific value of the third preset threshold are not limited in this embodiment. Optionally, the third preset threshold may be configured by the first network device in the first communication system. For an implementation in which the terminal device obtains the third preset threshold, refer to the manner of obtaining the first preset threshold. Principles are similar. Details are not described herein again.

Optionally, in still another implementation, the switching condition of switching from the first communication system to the second communication system may include: The terminal device detects, in the first communication system, that a radio link failure occurs.

Specifically, when the terminal device detects that the radio link failure occurs, it indicates that the terminal device is out of synchronization with a network device in the first communication system, cannot continue to perform a service, and needs to switch to the second communication system. In this case, because the terminal device has obtained the second access parameter used to access the second communication system, the terminal device may quickly switch to the second communication system. It should be noted that a specific method for detecting the radio link failure by the terminal device is not limited in this embodiment, and a detection method in an existing communication system may be used.

Optionally, in still another implementation, the switching condition of switching from the first communication system to the second communication system may include: The terminal device obtains no downlink control information through monitoring within preset duration.

Specifically, if the terminal device obtains no downlink control information through monitoring within preset duration, it indicates that the terminal device has no service, and may switch to the second communication system, to reduce power consumption of the terminal device and improve a battery life. Because the terminal device has obtained the second access parameter used to access the second communication system, the terminal device may quickly switch to the second communication system. It should be noted that a specific value of the preset duration is not limited in this embodiment. Optionally, the preset duration may be configured by the first network device in the first communication system. For an implementation in which the terminal device obtains the preset duration, refer to the manner of obtaining the first preset threshold. Principles are similar. Details are not described herein again.

Optionally, in still another implementation, the switching condition of switching from the first communication system to the second communication system may include: The terminal device receives a third message sent by the first network device in the first communication system, where the third message includes indication information, and the indication information is used to indicate the terminal device to switch from the first communication system to the second communication system.

Specifically, in this implementation, the first network device in the first communication system may indicate, by using the third message, the terminal device to perform inter-system switching. Correspondingly, the terminal device may quickly switch from the first communication system to the second communication system based on the third message and the obtained second access parameter used to access the second communication system. It should be noted that a name of the third message and specific content included in the third message are not limited in this embodiment. For example, the third message may also be referred to as a release message. Optionally, the third message may further include the frequency band information of the second communication system and/or the frequency information of the second communication system.

In another application scenario, the system bandwidth of the first communication system may be less than the system bandwidth of the second communication system. For example, the first communication system is an NB-IoT communication system or an eMTC communication system, and the second communication system is an NR communication system. Alternatively, the first communication system is an NB-IoT communication system, and the second communication system is an eMTC system.

Optionally, in an implementation, the switching condition of switching from the first communication system to the second communication system may include: A channel quality measurement value of the terminal device in the first communication system is greater than or equal to a second preset threshold.

Specifically, the terminal device accesses the first communication system, and the channel quality measurement value in the first communication system may be measured. A larger channel quality measurement value indicates better channel quality and better coverage of the first communication system. Because the system bandwidth of the first communication system is relatively small, better coverage may cause a lower data transmission rate. To increase a service volume, quickly complete a service, and reduce a delay, the terminal device may select the second system, for example, an NR communication system, having the larger system bandwidth. Because the terminal device has obtained the second access parameter used to access the second communication system, the terminal device may quickly switch from the first communication system to the second communication system.

For implementations of the channel quality measurement value, refer to the foregoing description. Principles are similar. Details are not described herein again.

Optionally, the second preset threshold may be configured by the first network device in the first communication system. For an implementation in which the terminal device obtains the second preset threshold, refer to the manner of obtaining the first preset threshold. Principles are similar. Details are not described herein again.

Optionally, in another implementation, the switching condition of switching from the first communication system to the second communication system may include: A quantity of repetitions of a control channel when the terminal device satisfies a preset BLER in the first communication system is less than a fourth preset threshold.

Specifically, a smaller quantity of repetitions of the control channel when the preset BLER is satisfied indicates better channel quality. When the quantity of repetitions is less than the fourth preset threshold, the terminal device may switch to the second communication system. In this case, because the terminal device has obtained the second access parameter used to access the second communication system, the terminal device may quickly switch to the second communication system. It should be noted that a value of the preset BLER and a specific value of the fourth preset threshold are not limited in this embodiment. Optionally, the fourth preset threshold may be configured by the first network device in the first communication system. For an implementation in which the terminal device obtains the fourth preset threshold, refer to the manner of obtaining the first preset threshold. Principles are similar. Details are not described herein again.

Optionally, in still another implementation, the switching condition of switching from the first communication system to the second communication system may include: A coverage level of the terminal device in the first communication system is a preset coverage level.

Specifically, the coverage level in the first communication system may reflect signal strength of the first communication system. The following describes the coverage level in the first communication system by using an NB-IoT communication system as an example. For example, the first network device in the first communication system may configure a plurality of preset values, and the plurality of preset values are used to divide different coverage levels. For example, the plurality of preset values may include A1 and A2. A1<A2. When a channel quality measurement value in the NB-IoT system is less than A1, the coverage level may be defined as a coverage level 2, or may be marked as CE 2. When a channel quality measurement value in the NB-IoT system is greater than or equal to A1 and less than A2, the coverage level may be defined as a coverage level 1, or may be marked as CE 1. When a channel quality measurement value in the NB-IoT system is greater than or equal to A2, the coverage level may be defined as a coverage level 0, or may be marked as CE 0. An eMTC communication system also has a similar concept of the coverage level. The eMTC system supports a maximum of four coverage levels, namely, CE 0, CE 1, CE 2, and CE 3, and a method for determining a coverage level is similar to that used in the NB-IoT system. A plurality of preset values may be configured. The plurality of preset values are used to divide different coverage levels. For example, the plurality of preset values may include B1, B2, and B3. B1<B2<B3. When a channel quality measurement value in the eMTC system is less than B1, the coverage level may be defined as a coverage level 3, or may be marked as the CE 3. When a channel quality measurement value in the eMTC system is greater than or equal to B1 and less than B2, the coverage level may be defined as a coverage level 2, or may be marked as the CE 2. When a channel quality measurement value in the eMTC system is greater than or equal to B2 and less than B3, the coverage level may be defined as a coverage level 1, or may be marked as the CE 1. When a channel quality measurement value in the eMTC system is greater than or equal to B3, the coverage level may be defined as a coverage level 0, or may be marked as the CE 0. After accessing the first communication system, the terminal device may measure the channel quality measurement value in the first communication system, and determine the coverage level in the first communication system based on a magnitude relationship between the channel quality measurement value and a plurality of preset values. It is assumed that the preset coverage level is the CE 0. When the coverage level of the terminal device in the first communication system is the preset coverage level, to increase the service volume, quickly complete the service, and reduce the delay, the terminal device may switch to the second system having the larger system bandwidth. Because the terminal device has obtained the second access parameter used to access the second communication system, the terminal device may quickly switch from the first communication system to the second communication system.

It should be noted that the preset coverage level is not limited in this embodiment, and is set based on a requirement. Optionally, the preset coverage level may be configured by the first network device in the first communication system. For an implementation in which the terminal device obtains the preset coverage level, refer to the manner of obtaining the first preset threshold. Principles are similar. Details are not described herein again.

Optionally, in still another implementation, the switching condition of switching from the first communication system to the second communication system may include: A coverage enhancement mode of the terminal device in the first communication system is a preset coverage enhancement mode.

Specifically, the coverage enhancement mode in the first communication system may reflect the signal strength of the first communication system. The following describes the coverage enhancement mode in the first communication system by using the eMTC communication system as an example. For example, when a coverage level in the eMTC system is the CE 0 or the CE 1, the coverage enhancement mode may be defined as a coverage enhancement mode A, or may be marked as a CE mode A. When a coverage level in the eMTC system is the CE 2 or the CE 3, the coverage enhancement mode may be defined as a coverage enhancement mode B, or may be marked as a CE mode B. After accessing the first communication system, the terminal device may measure the channel quality measurement value in the first communication system, and determine the coverage enhancement mode in the first communication system based on the magnitude relationship between the channel quality measurement value and the plurality of preset values. It is assumed that the preset coverage enhancement mode is the CE mode A. When the coverage enhancement mode of the terminal device in the first communication system is the preset coverage enhancement mode, to increase the service volume, quickly complete the service, and reduce the delay, the terminal device may switch to the second system having the larger system bandwidth. Because the terminal device has obtained the second access parameter used to access the second communication system, the terminal device may quickly switch from the first communication system to the second communication system.

It should be noted that the preset coverage enhancement mode is not limited in this embodiment, and is set based on a requirement. Optionally, the preset coverage enhancement mode may be configured by the first network device in the first communication system. For an implementation in which the terminal device obtains the preset coverage enhancement mode, refer to the manner of obtaining the first preset threshold. Principles are similar. Details are not described herein again.

Optionally, in still another implementation, the switching condition of switching from the first communication system to the second communication system may include: The terminal device receives a fourth message sent by the first network device in the first communication system, where the fourth message includes indication information, and the indication information is used to indicate the terminal device to switch from the first communication system to the second communication system.

Specifically, the fourth message is similar to the foregoing third message, and is used to indicate the terminal device to switch from the first communication system to the second communication system. Principles are similar. Details are not described herein again.

This embodiment provides the communication method, including: The terminal device receives, from the first network device in the first communication system, the first access parameter used to access the first communication system and the second access parameter used to access the second communication system; and the terminal device accesses the first communication system based on the first access parameter; the terminal device switches from the first communication system to the second communication system based on the second access parameter when satisfying the switching condition of switching from the first communication system to the second communication system; or the terminal device accesses the first communication system and the second communication system based on the first access parameter and the second access parameter. According to the communication method provided in this embodiment, the terminal device may obtain, by using one of the communication systems, the access parameters for respectively accessing the two communication systems, the terminal device can implement simultaneous access to the two communication systems or fast switching between the systems, thereby avoiding the problems of the increased delay and the increased power consumption that are caused by blind frequency scanning, resolving the communication problem of facing the plurality of types of communication systems, and in particular, resolving the communication problem caused when the NR communication system and the CIoT communication system are simultaneously operated.

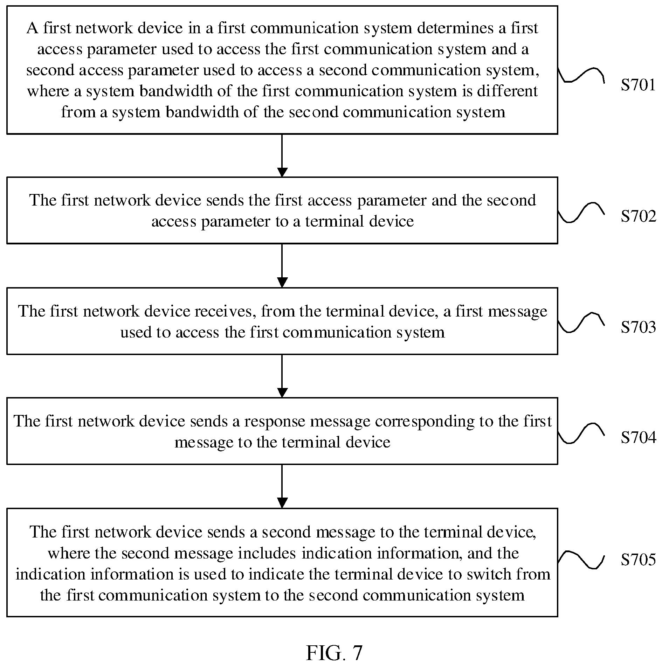

FIG. 7 is a flowchart of another implementation of a communication method according to an embodiment of this application. The communication method provided in this embodiment may be executed by a network device. The network device may be specifically a first network device in a first communication system. As shown in FIG. 7, the communication method provided in this embodiment may include the following steps.

S701: The first network device in the first communication system determines a first access parameter used to access the first communication system and a second access parameter used to access a second communication system, where a system bandwidth of the first communication system is different from a system bandwidth of the second communication system.

For implementations of the first communication system, the second communication system, the first access parameter, and the second access parameter, refer to related descriptions in the embodiments shown in FIG. 4 to FIG. 6. Principles are similar. Details are not described herein again.

The following describes, by using examples, an application scenario of the communication method provided in this embodiment.

Optionally, in a first example, the first communication system may be an NR communication system, and the second communication system may be an NB-IoT communication system. The system bandwidth of the first communication system is greater than the system bandwidth of the second communication system.

Optionally, in a second example, the first communication system may be an NR communication system, and the second communication system may be an eMTC communication system. The system bandwidth of the first communication system is greater than the system bandwidth of the second communication system.

Optionally, in a third example, the first communication system may be an eMTC communication system, and the second communication system may be an NB-IoT communication system. The system bandwidth of the first communication system is greater than the system bandwidth of the second communication system.

Optionally, in a fourth example, the first communication system may be an NB-IoT communication system, and the second communication system may be an NR communication system. The system bandwidth of the first communication system is less than the system bandwidth of the second communication system.

Optionally, in a fifth example, the first communication system may be an eMTC communication system, and the second communication system may be an NR communication system. The system bandwidth of the first communication system is less than the system bandwidth of the second communication system.

Optionally, in a sixth example, the first communication system may be an NB-IoT communication system, and the second communication system may be an eMTC communication system. The system bandwidth of the first communication system is less than the system bandwidth of the second communication system.

S702: The first network device sends the first access parameter and the second access parameter to a terminal device.

Optionally, the first access parameter and the second access parameter may be carried in a same message, or may be carried in different messages. A name, a sending occasion, and a quantity of sending times of the message are not limited in this embodiment.

Optionally, in an implementation, in S702, the first network device may send a system message to the terminal device. The system message includes the first access parameter and the second access parameter.

Optionally, in another implementation, in S702, the first network device may send a system message to the terminal device. The system message includes the first access parameter. The first network device may send an RRC message to the terminal device. The RRC message includes the second access parameter.

S703: The first network device receives, from the terminal device, a first message used to access the first communication system.

S704: The first network device sends a response message corresponding to the first message to the terminal device.

Specifically, the terminal device may access the first network device in the first communication system by using the first message and the response message of the first message. Names and quantities of the first message and the response messages of the first message and specific content included in the first message and the response messages of the first message are not limited in this embodiment, and may vary with different types of communication systems and different access processes.

The following provides description by using examples.

Optionally, in an example, with reference to step 1 to step 4 in S402 in the embodiments shown in FIG. 4 to FIG. 6, in the 4-step random access process, both a quantity of first messages and a quantity of response messages of the first messages may be 2. The first messages may be specifically a message 1 and a message 3, and the response messages of the first messages may be specifically a message 2 and a message 4.

Optionally, in another example, with reference to step a and step b in S402 in the embodiments shown in FIG. 4 to FIG. 6, in the 2-step random access process, both a quantity of first messages and a quantity of response messages of the first messages may be 1. The first message may be specifically a message A, and the response message of the first message may be specifically a message B.

S705: The first network device sends a second message to the terminal device, where the second message includes indication information, and the indication information is used to indicate the terminal device to switch from the first communication system to the second communication system.

Specifically, after sending the response message of the first message to the terminal device, the first network device may determine that the terminal device accesses the first network device. If the first network device determines to switch the terminal device from the first communication system to the second communication system, the first network device may send the second message to the terminal device, to indicate the terminal device to switch from the first communication system to the second communication system. It should be noted that a name of the second message and specific content included in the second message are not limited in this embodiment. For example, the second message may be referred to as a release message. Optionally, the second message may include frequency band information of the second communication system and/or frequency information of the second communication system.

Optionally, the first network device may further send configuration information to the terminal device. Optionally, if the system bandwidth of the first communication system is greater than the system bandwidth of the second communication system, the configuration information may include at least one of the following: a first preset threshold, a third preset threshold, and preset duration. For meanings of the first preset threshold, the third preset threshold, and the preset duration, refer to related descriptions in the embodiments shown in FIG. 4 to FIG. 6. Principles are similar. Details are not described herein again. Optionally, if the system bandwidth of the first communication system is less than the system bandwidth of the second communication system, the configuration information may include at least one of the following: a second preset threshold, a fourth preset threshold, a preset coverage level, and a preset coverage enhancement mode. For meanings of the second preset threshold, the fourth preset threshold, the preset coverage level, and the preset coverage enhancement mode, refer to related descriptions in the embodiments shown in FIG. 4 to FIG. 6. Principles are similar. Details are not described herein again.

This embodiment provides the communication method, applicable to a scenario in which the terminal device supports two communication systems and the two communication systems are operated in a same area. The first network device in the first communication system may send, to the terminal device, the first access parameter used to access the first communication system and the second access parameter used to access the second communication system, so that the first network device in the first communication system may perform an access process initiated by the terminal device based on the first access parameter and the second access parameter. In addition, the first network device may send, to the terminal device, a message used to indicate to switch from the first communication system to the second communication system. Because the first network device has sent the second access parameter to the terminal device, the terminal device can implement fast inter-system switching, thereby resolving a communication problem of facing a plurality of types of communication systems, and in particular, resolving a communication problem caused when an NR communication system and a CIoT communication system are simultaneously operated.

Based on the foregoing embodiments shown in FIG. 4 to FIG. 7 and with reference to a connection status of the terminal device, the following describes examples of a message exchange procedure that may be involved between the terminal device, the first network device in the first communication system, and the second network device in the second communication system. It should be noted that a name of each message is merely an example, and a name of the message is not limited. For example, the first communication system and the second communication system may be any two of an NR communication system, an NB-IoT communication system, and an eMTC communication system.

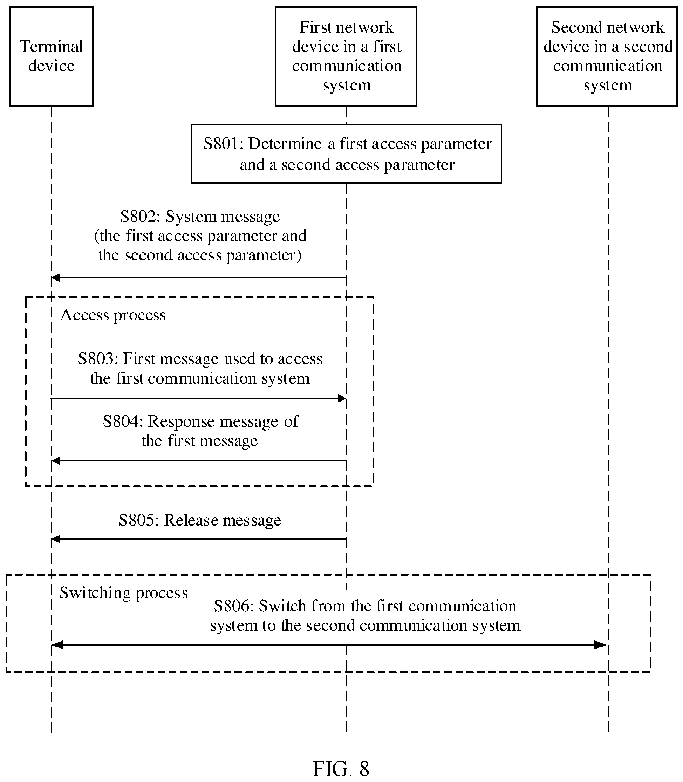

FIG. 8 is a message exchange diagram of still another implementation of a communication method according to an embodiment of this application. In this embodiment, a connection status of a terminal device may be an idle state. The terminal device camps on a first communication system. The terminal device simultaneously receives a first access parameter and a second access parameter by using a system message. The terminal device may access the first communication system. Subsequently, the terminal device switches to a second communication system with an indication of a first network device. As shown in FIG. 8, the communication method provided in this embodiment may include the following steps.

S801: The first network device in the first communication system determines the first access parameter used to access the first communication system and the second access parameter used to access the second communication system, where a system bandwidth of the first communication system is different from a system bandwidth of the second communication system.

S802: The first network device sends the system message of the first communication system to the terminal device, where the system message includes the first access parameter and the second access parameter.

Correspondingly, the terminal device receives the system message from the first network device in the first communication system.

S803: The terminal device sends, to the first network device, a first message used to access the first communication system.

Correspondingly, the first network device receives the first message sent by the terminal device.

S804: The first network device sends a response message corresponding to the first message to the terminal device.

Correspondingly, the terminal device receives the response message that is of the first message and that is sent by the first network device.

The terminal device accesses the first network device in the first communication network by using S803 and S804.

S805: The first network device sends a release message to the terminal device, where the release message includes indication information, and the indication information is used to indicate the terminal device to switch from the first communication system to the second communication system.

S806: The terminal device switches from the first communication system to the second communication system.

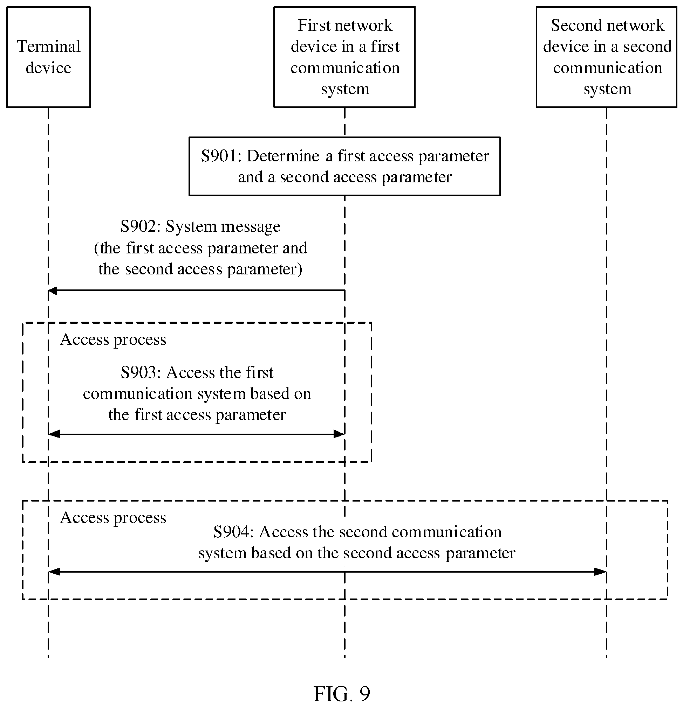

FIG. 9 is a message exchange diagram of still another implementation of a communication method according to an embodiment of this application. In this embodiment, a connection status of a terminal device may be an idle state. The terminal device camps on a first communication system. The terminal device simultaneously receives a first access parameter and a second access parameter by using a system message. The terminal device may first access the first communication system. Subsequently, the terminal device accesses a second communication system. A first network device is a primary network device of the terminal device, and a second network device is a secondary network device of the terminal device. As shown in FIG. 9, the communication method provided in this embodiment may include the following steps.

S901: The first network device in the first communication system determines the first access parameter used to access the first communication system and the second access parameter used to access the second communication system, where a system bandwidth of the first communication system is different from a system bandwidth of the second communication system.

S902: The first network device sends the system message of the first communication system to the terminal device, where the system message includes the first access parameter and the second access parameter.

Correspondingly, the terminal device receives the system message from the first network device in the first communication system.

S903: The terminal device accesses the first communication system based on the first access parameter.

S904: The terminal device accesses the second communication system based on the second access parameter.

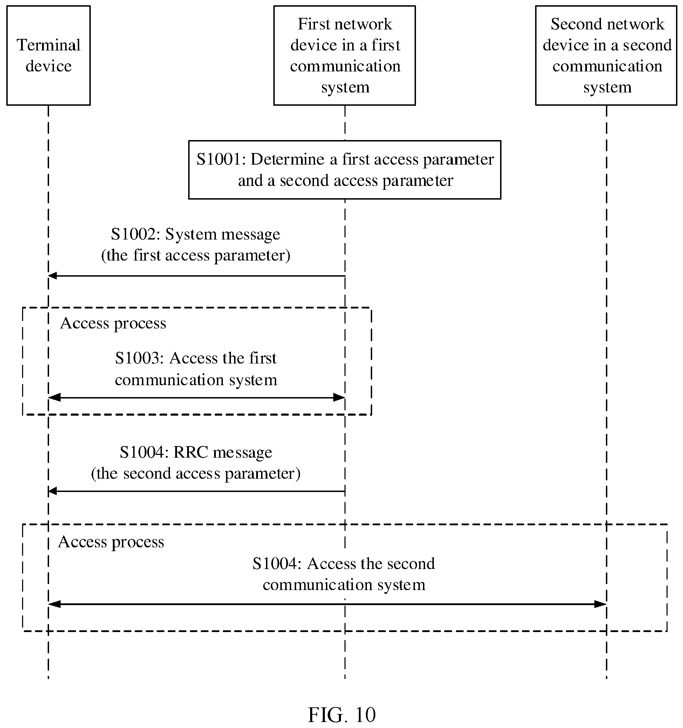

FIG. 10 is a message exchange diagram of still another implementation of a communication method according to an embodiment of this application. In this embodiment, a connection status of a terminal device may be an idle state. The terminal device camps on a first communication system. The terminal device may receive a first access parameter by using a system message. The terminal device may access the first communication system. Subsequently, the terminal device may receive a second access parameter by using an RRC message. The terminal device may further access a second communication system. A first network device is a primary network device of the terminal device, and a second network device is a secondary network device of the terminal device. As shown in FIG. 10, the communication method provided in this embodiment may include the following steps.

S1001: The first network device in the first communication system determines the first access parameter used to access the first communication system and the second access parameter used to access the second communication system, where a system bandwidth of the first communication system is different from a system bandwidth of the second communication system.

S1002: The first network device sends the system message of the first communication system to the terminal device, where the system message includes the first access parameter.

Correspondingly, the terminal device receives the system message from the first network device in the first communication system.

S1003: The terminal device accesses the first communication system based on the first access parameter.

S1004: The first network device sends the RRC message to the terminal device, where the RRC message includes the second access parameter.

Correspondingly, the terminal device receives the RRC message from the first network device in the first communication system.

S1005: The terminal device accesses the second communication system based on the second access parameter.

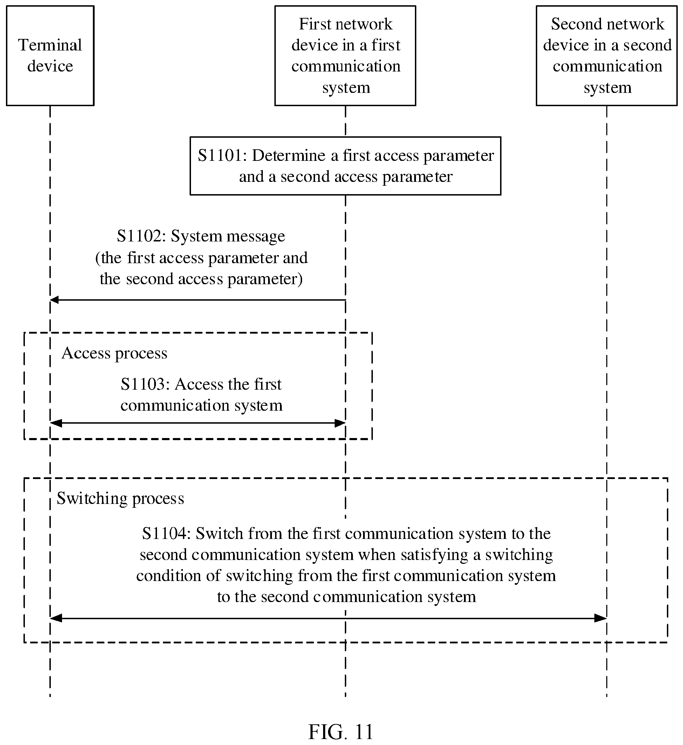

FIG. 11 is a message exchange diagram of still another implementation of a communication method according to an embodiment of this application. In this embodiment, a connection status of a terminal device may be an idle state. The terminal device camps on a first communication system. The terminal device may receive a first access parameter and a second access parameter by using a system message. The terminal device accesses the first communication system. Subsequently, the terminal device switches from the first communication system to a second communication system when satisfying a switching condition of switching from the first communication system to the second communication system. As shown in FIG. 11, the communication method provided in this embodiment may include the following steps.

S1101: A first network device in the first communication system determines the first access parameter used to access the first communication system and the second access parameter used to access the second communication system, where a system bandwidth of the first communication system is different from a system bandwidth of the second communication system.

S1102: The first network device sends the system message of the first communication system to the terminal device, where the system message includes the first access parameter and the second access parameter.

Correspondingly, the terminal device receives the system message from the first network device in the first communication system.

S1103: The terminal device accesses the first communication system based on the first access parameter.

S1104: The terminal device switches from the first communication system to the second communication system based on the second access parameter when satisfying the switching condition of switching from the first communication system to the second communication system.

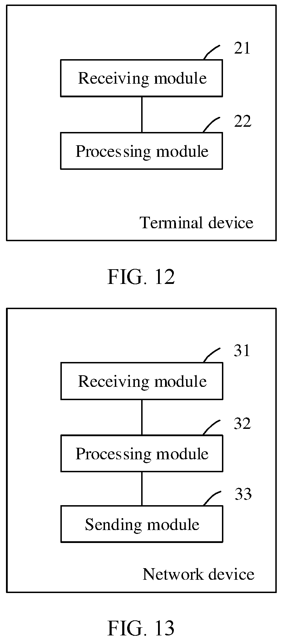

FIG. 12 is a schematic diagram of a structure of a terminal device according to an embodiment of this application. The terminal device provided in this embodiment may perform the communication method provided in the embodiments shown in FIG. 4 to FIG. 6. As shown in FIG. 12, the terminal device provided in this embodiment may include:
a receiving module 21, configured to receive, from a first network device in a first communication system, a first access parameter used to access the first communication system and a second access parameter used to access a second communication system, where a system bandwidth of the first communication system is different from a system bandwidth of the second communication system; and
a processing module 22, configured to access the first communication system according to the first access parameter; configured to switch from the first communication system to the second communication system based on the second access parameter when a switching condition of switching from the first communication system to the second communication system is satisfied; or configured to access the first communication system and the second communication system based on the first access parameter and the second access parameter.

The second access parameter includes frequency band information of the second communication system and/or frequency information of the second communication system, and further includes at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system.

If the second communication system is a new radio NR communication system, the parameter set further includes configuration information of remaining minimum system information RMSI; or if the second communication system is a narrowband internet of things NB-IoT communication system or an enhanced machine type communication eMTC system, the parameter set further includes operation mode information of the second communication system.

Optionally, the system bandwidth of the first communication system is greater than the system bandwidth of the second communication system, and the switching condition of switching from the first communication system to the second communication system includes at least one of the following conditions:
a channel quality measurement value of the terminal device in the first communication system is less than a first preset threshold;
the terminal device detects, in the first communication system, that a radio link failure occurs;
the terminal device obtains no downlink control information through monitoring within preset duration; and
the terminal device receives a first message sent by the first network device in the first communication system, where the first message includes indication information, and the indication information is used to indicate the terminal device to switch from the first communication system to the second communication system.

Optionally, the system bandwidth of the first communication system is less than the system bandwidth of the second communication system, and the switching condition of switching from the first communication system to the second communication system includes at least one of the following conditions:
a channel quality measurement value of the terminal device in the first communication system is greater than or equal to a second preset threshold;
a coverage level of the terminal device in the first communication system is a preset coverage level;
a coverage enhancement mode of the terminal device in the first communication system is a preset coverage enhancement mode; and
the terminal device receives a second message sent by the first network device in the first communication system, where the second message includes indication information, and the indication information is used to indicate the terminal device to switch from the first communication system to the second communication system.

The terminal device provided in this embodiment may perform the communication method provided in the embodiments shown in FIG. 4 to FIG. 6. Technical principles and technical effects are similar. Details are not described herein again.

FIG. 13 is a schematic diagram of a structure of a network device according to an embodiment of this application. The network device provided in this embodiment may perform the communication method provided in the embodiment shown in FIG. 7. As shown in FIG. 13, the network device provided in this embodiment may include:
a processing module 32, configured to determine a first access parameter used to access a first communication system and a second access parameter used to access a second communication system, where a system bandwidth of the first communication system is different from a system bandwidth of the second communication system;
a sending module 33, configured to send the first access parameter and the second access parameter to a terminal device; and
a receiving module 31, configured to receive. from the terminal device, a first message used to access the first communication system, where
the sending module 33 is further configured to send a response message corresponding to the first message to the terminal device; and
the sending module 33 is further configured to send a second message to the terminal device, where the second message includes indication information, and the indication information is used to indicate the terminal device to switch from the first communication system to the second communication system.

The second access parameter includes frequency band information of the second communication system and/or frequency information of the second communication system, and further includes at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system.

If the second communication system is a new radio NR communication system, the parameter set further includes configuration information of remaining minimum system information RMSI; or if the second communication system is a narrowband internet of things NB-IoT communication system or an enhanced machine type communication eMTC system, the parameter set further includes operation mode information of the second communication system.

The network device provided in this embodiment may perform the communication method provided in the embodiment shown in FIG. 7. Technical principles and technical effects are similar. Details are not described herein again.

It should be understood that division into the modules in the device is merely logical function division. During actual implementation, all or some of the modules may be integrated into one physical entity or may be physically separated. In addition, all the modules in the apparatus may be implemented in a form of software invoked by a processing element, or may be implemented in a form of hardware; or some modules may be implemented in a form of software invoked by a processing element, and some modules may be implemented in a form of hardware. For example, each module may be a separately disposed processing element, or may be integrated into a chip of the apparatus for implementation. In addition, each module may alternatively be stored in the memory in a form of a program to be invoked by a processing element of the apparatus to perform a function of the module. In addition, all or some of the modules may be integrated together, or may be implemented independently. The processing element herein may also be referred to as a processor, and may be an integrated circuit having a signal processing capability. In an implementation process, the steps of the foregoing methods or the foregoing modules may be implemented by using a hardware integrated logic circuit in the processor element, or may be implemented in a form of software invoked by the processing element.

In an example, a module in any one of the foregoing devices may be one or more integrated circuits configured to implement the foregoing methods, for example, one or more application specific integrated circuits (ASIC), one or more microprocessors (DSP), one or more field programmable gate arrays (FPGA), or a combination of at least two of the integrated circuit forms. For another example, when the module in the apparatus may be implemented by scheduling a program by a processing element, the processing element may be a general-purpose processor, for example, a central processing unit (CPU) or another processor that can invoke the program. For another example, the modules may be integrated together, and implemented in a form of a system-on-a-chip (SOC).

The foregoing sending or receiving module is an interface circuit of the device, and is configured to transmit a signal with another device.

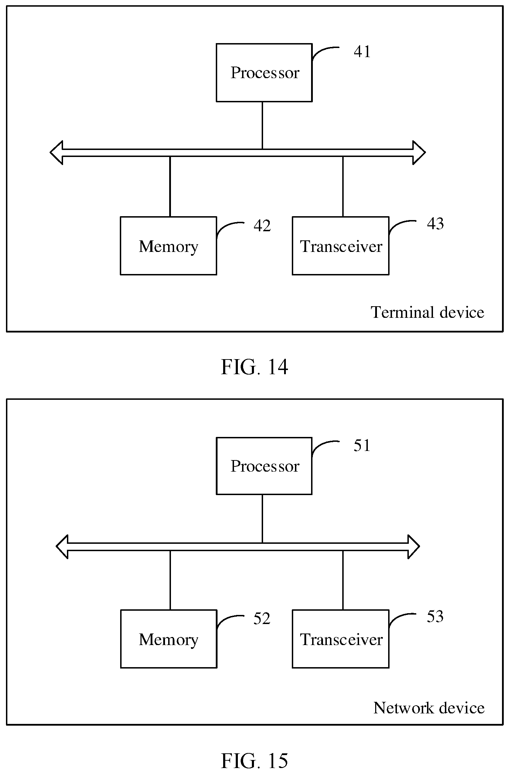

FIG. 14 is a schematic diagram of a structure of another terminal device according to an embodiment of this application. The terminal device provided in this embodiment is configured to perform the communication method provided in the embodiments shown in FIG. 4 to FIG. 6. As shown in FIG. 14, the terminal device provided in this embodiment may include a processor 41, a memory 42, and a transceiver 43. The transceiver 43 is configured to receive data or send data. The memory 42 is configured to store instructions. The processor 41 is configured to execute the instructions stored in the memory 42, and is configured to perform the communication method provided in the embodiments shown in FIG. 4 to FIG. 6.

The terminal device provided in this embodiment is used in the communication methods provided in the embodiments shown in FIG. 4 to FIG. 6. Technical principles and technical effects are similar. Details are not described herein again.

FIG. 15 is a schematic diagram of a structure of another network device according to an embodiment of this application. The network device provided in this embodiment is configured to perform the communication method provided in the embodiment shown in FIG. 7. As shown in FIG. 15, the network device provided in this embodiment may include a processor 51, a memory 52, and a transceiver 53. The transceiver 53 is configured to receive data or send data. The memory 52 is configured to store instructions. The processor 51 is configured to execute the instructions stored in the memory 22, and is configured to perform the communication method provided in the embodiment shown in FIG. 7.

The network device provided in this embodiment is used in the communication method provided in the embodiment shown in FIG. 7. Technical principles and technical effects are similar. Details are not described herein again.

In the embodiments of this application, the processor may be a general purpose processor, a digital signal processor, an application specific integrated circuit, a field programmable gate array or another programmable logic device, a discrete gate or a transistor logic device, or a discrete hardware component, and may implement or execute the methods, steps, and logical block diagrams disclosed in the embodiments of this application. The general purpose processor may be a microprocessor or any conventional processor or the like. The steps of the methods disclosed with reference to the embodiments of this application may be directly performed and accomplished by using a hardware processor, or may be performed and accomplished by using a combination of hardware and software modules in the processor.

In the embodiments of this application, the memory may be a non-volatile memory, such as a hard disk drive (HDD) or a solid-state drive (SSD), or may be a volatile memory, such as a random access memory (RAM). The memory is any medium that can be used to carry or store expected program code in a form of instructions or a data structure and that can be accessed by a computer, but is not limited thereto. The memory in the embodiments of this application may alternatively be a circuit or any other apparatus that can implement a storage function, and is configured to store program instructions and/or data.

## Claims

1. A communication method, comprising:
receiving (S401), by a communication device from a first network device in a first communication system, a first access parameter used to access the first communication system and a second access parameter used to access a second communication system, wherein a system bandwidth of the first communication system is different from a system bandwidth of the second communication system; and
switching (S403), by the communication device, from the first communication system to the second communication system based on the second access parameter when satisfying a switching condition of switching from the first communication system to the second communication system,
**characterized in that** the second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system; and
that if the second communication system is a new radio NR communication system, the parameter set further comprises configuration information of remaining minimum system information RMSI; or
if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

2. The method according to claim 1, wherein the system bandwidth of the first communication system is greater than the system bandwidth of the second communication system, and the switching condition of switching from the first communication system to the second communication system comprises at least one of the following conditions:
a channel quality measurement value of the communication device in the first communication system is less than a first preset threshold;
the communication device detects, in the first communication system, that a radio link failure occurs;
the communication device obtains no downlink control information through monitoring within preset duration; and
the communication device receives a first message sent by the first network device in the first communication system, wherein the first message comprises indication information, and the indication information is used to indicate the communication device to switch from the first communication system to the second communication system; or
wherein the system bandwidth of the first communication system is less than the system bandwidth of the second communication system, and the switching condition of switching from the first communication system to the second communication system comprises at least one of the following conditions:
a channel quality measurement value of the communication device in the first communication system is greater than or equal to a second preset threshold;
a coverage level of the communication device in the first communication system is a preset coverage level;
a coverage enhancement mode of the communication device in the first communication system is a preset coverage enhancement mode; and
the communication device receives a second message sent by the first network device in the first communication system, wherein the second message comprises indication information, and the indication information is used to indicate the communication device to switch from the first communication system to the second communication system.

3. A communication method, comprising:
determining (S701), by a first network device in a first communication system, a first access parameter used to access the first communication system and a second access parameter used to access a second communication system, wherein a system bandwidth of the first communication system is different from a system bandwidth of the second communication system;
sending (S702), by the first network device, the first access parameter and the second access parameter to a communication device;
receiving (S703), by the first network device from the communication device, a first message used to access the first communication system;
sending (S704), by the first network device, a response message corresponding to the first message to the communication device; and
sending (S705), by the first network device, a second message to the communication device, wherein the second message comprises indication information, and the indication information is used to indicate the communication device to switch from the first communication system to the second communication system,
**characterized in that** the second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system; and
that if the second communication system is a new radio NR communication system, the parameter set further comprises configuration information of remaining minimum system information RMSI; or
if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

4. A communication device, comprising:
a receiving module, configured to receive, from a first network device in a first communication system, a first access parameter used to access the first communication system and a second access parameter used to access a second communication system, wherein a system bandwidth of the first communication system is different from a system bandwidth of the second communication system; and
a processing module, configured to switch from the first communication system to the second communication system based on the second access parameter when satisfying a switching condition of switching from the first communication system to the second communication system,
**characterized in that** the second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system; and
that if the second communication system is a new radio NR communication system, the parameter set further comprises configuration information of remaining minimum system information RMSI; or
if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

5. The communication device according to claim 4, wherein the system bandwidth of the first communication system is greater than the system bandwidth of the second communication system, and the switching condition of switching from the first communication system to the second communication system comprises at least one of the following conditions:
a channel quality measurement value of the communication device in the first communication system is less than a first preset threshold;
the communication device detects, in the first communication system, that a radio link failure occurs;
the communication device obtains no downlink control information through monitoring within preset duration; and
the communication device receives a first message sent by the first network device in the first communication system, wherein the first message comprises indication information, and the indication information is used to indicate the communication device to switch from the first communication system to the second communication system; or
wherein the system bandwidth of the first communication system is less than the system bandwidth of the second communication system, and the switching condition of switching from the first communication system to the second communication system comprises at least one of the following conditions:
a channel quality measurement value of the communication device in the first communication system is greater than or equal to a second preset threshold;
a coverage level of the communication device in the first communication system is a preset coverage level;
a coverage enhancement mode of the communication device in the first communication system is a preset coverage enhancement mode; and
the communication device receives a second message sent by the first network device in the first communication system, wherein the second message comprises indication information, and the indication information is used to indicate the communication device to switch from the first communication system to the second communication system.

6. A network device, comprising:
a processing module, configured to determine a first access parameter used to access a first communication system and a second access parameter used to access a second communication system, wherein a system bandwidth of the first communication system is different from a system bandwidth of the second communication system;
a sending module, configured to send the first access parameter and the second access parameter to a communication device; and
a receiving module, configured to receive, from the communication device, a first message used to access the first communication system, wherein
the sending module is further configured to send a response message corresponding to the first message to the communication device; and
the sending module is further configured to send a second message to the communication device, wherein the second message comprises indication information, and the indication information is used to indicate the communication device to switch from the first communication system to the second communication system,
**characterized in that** the second access parameter comprises frequency band information of the second communication system and/or frequency information of the second communication system, and further comprises at least one in the following parameter set: cell identity information of the second communication system, information used to indicate whether a second network device in the second communication system and the first network device in the first communication system are co-sited, information used to indicate whether the cell identity information of the second communication system is the same as cell identity information of the first communication system, configuration information of a random access channel of the second communication system, information about a frame number offset between the second communication system and the first communication system, information about a subframe number offset between the second communication system and the first communication system, and information about a slot offset between the second communication system and the first communication system; and
that if the second communication system is a new radio NR communication system, the parameter set further comprises configuration information of remaining minimum system information RMSI; or
if the second communication system is a narrowband internet of things NB-IoT communication system or an enhanced machine type communication eMTC system, the parameter set further comprises operation mode information of the second communication system, wherein the operation mode information of the second communication system comprises information on at least one of a standalone operation mode, a guard band operation mode, or an in-band operation mode.

7. A storage medium, storing computer-executable instructions to cause the communication device of claim 4 to execute the steps of the method of claim 1.

8. A storage medium, storing computer-executable instructions to cause the communication device of claim 6 to execute the steps of the method of claim 3.

## Patentansprüche

1. Kommunikationsverfahren, umfassend:
Empfangen (S401), durch eine Kommunikationsvorrichtung von einer ersten Netzwerkvorrichtung in einem ersten Kommunikationssystem, eines ersten Zugriffsparameters, der dazu verwendet wird, auf das erste Kommunikationssystem zuzugreifen, und eines zweiten Zugriffsparameters, der dazu verwendet wird, auf ein zweites Kommunikationssystem zuzugreifen, wobei sich eine Systembandbreite des ersten Kommunikationssystems von einer Systembandbreite des zweiten Kommunikationssystems unterscheidet; und
Umschalten (S403), durch die Kommunikationsvorrichtung, von dem ersten Kommunikationssystem auf das zweite Kommunikationssystem basierend auf dem zweiten Zugriffsparameter bei Erfüllen einer Umschaltbedingung zum Umschalten von dem ersten Kommunikationssystem auf das zweite Kommunikationssystem,
**dadurch gekennzeichnet, dass** der zweite Zugriffsparameter Frequenzbandinformationen des zweiten Kommunikationssystems und/oder Frequenzinformationen des zweiten Kommunikationssystems umfasst und ferner mindestens eines im folgenden Parametersatz umfasst: Zellidentitätsinformationen des zweiten Kommunikationssystems, Informationen, die dazu verwendet werden, anzugeben, ob eine zweite Netzwerkvorrichtung in dem zweiten Kommunikationssystem und die erste Netzwerkvorrichtung in dem ersten Kommunikationssystem zusammen angeordnet sind, Informationen, die dazu verwendet werden, anzugeben, ob die Zellidentitätsinformationen des zweiten Kommunikationssystems die gleichen wie Zellidentitätsinformationen des ersten Kommunikationssystems sind, Konfigurationsinformationen eines Direktzugriffskanals des zweiten Kommunikationssystems, Informationen über einen Rahmennummernversatz zwischen dem zweiten Kommunikationssystem und dem ersten Kommunikationssystem, Informationen über einen Teilrahmennummernversatz zwischen dem zweiten Kommunikationssystem und dem ersten Kommunikationssystem und Informationen über einen Schlitzversatz zwischen dem zweiten Kommunikationssystem und dem ersten Kommunikationssystem; und
dass, falls das zweite Kommunikationssystem ein New-Radio-Kommunikationssystem, NR-Kommunikationssystem, ist, der Parametersatz ferner Konfigurationsinformationen verbleibender Mindestsysteminformationen, RMSI, umfasst; oder
falls das zweite Kommunikationssystem ein Schmalband-Internetder-Dinge-Kommunikationssystem, NB-IoT-Kommunikationssystem, oder ein Enhanced-Machine-Type-Communication-System, eMTC-System, ist, der Parametersatz ferner Betriebsmodusinformationen des zweiten Kommunikationssystems umfasst, wobei die Betriebsmodusinformationen des zweiten Kommunikationssystems Informationen zu mindestens einem eines eigenständigen Betriebsmodus, eines Schutzbandbetriebsmodus oder eines Innenbandbetriebsmodus umfassen.

2. Verfahren nach Anspruch 1, wobei die Systembandbreite des ersten Kommunikationssystems größer als die Systembandbreite des zweiten Kommunikationssystems ist und die Umschaltbedingung zum Umschalten von dem ersten Kommunikationssystem auf das zweite Kommunikationssystem mindestens eine der folgenden Bedingungen umfasst:
ein Kanalqualitätsmesswert der Kommunikationsvorrichtung in dem ersten Kommunikationssystem ist kleiner als ein erster voreingestellter Schwellenwert;
die Kommunikationsvorrichtung detektiert in dem ersten Kommunikationssystem, dass ein Funkverknüpfungsfehler auftritt; die Kommunikationsvorrichtung erlangt innerhalb einer voreingestellten Dauer keine Downlink-Steuerinformationen mittels Überwachung; und
die Kommunikationsvorrichtung empfängt eine erste Nachricht, die durch die erste Netzwerkvorrichtung in dem ersten Kommunikationssystem gesendet wird, wobei die erste Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten; oder
wobei die Systembandbreite des ersten Kommunikationssystems kleiner als die Systembandbreite des zweiten Kommunikationssystems ist und die Umschaltbedingung zum Umschalten von dem ersten Kommunikationssystem auf das zweite Kommunikationssystem mindestens eine der folgenden Bedingungen umfasst:
ein Kanalqualitätsmesswert der Kommunikationsvorrichtung in dem ersten Kommunikationssystem ist größer als oder gleich einem zweiten voreingestellten Schwellenwert;
ein Abdeckungsgrad der Kommunikationsvorrichtung in dem ersten Kommunikationssystem ist ein voreingestellter Abdeckungsgrad;
ein Abdeckungsverbesserungsmodus der Kommunikationsvorrichtung in dem ersten Kommunikationssystem ist ein voreingestellter Abdeckungsverbesserungsmodus; und
die Kommunikationsvorrichtung empfängt eine zweite Nachricht, die durch die erste Netzwerkvorrichtung in dem ersten Kommunikationssystem gesendet wird, wobei die zweite Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten.

3. Kommunikationsverfahren, umfassend:
Bestimmen (S701), durch eine erste Netzwerkvorrichtung in einem ersten Kommunikationssystem, eines ersten Zugriffsparameters, der dazu verwendet wird, auf das erste Kommunikationssystem zuzugreifen, und eines zweiten Zugriffsparameters, der dazu verwendet wird, auf ein zweites Kommunikationssystem zuzugreifen, wobei sich eine Systembandbreite des ersten Kommunikationssystems von einer Systembandbreite des zweiten Kommunikationssystems unterscheidet;
Senden (S702), durch die erste Netzwerkvorrichtung, des ersten Zugriffsparameters und des zweiten Zugriffsparameters an eine Kommunikationsvorrichtung;
Empfangen (S703), durch die erste Netzwerkvorrichtung von der Kommunikationsvorrichtung, einer ersten Nachricht, die dazu verwendet wird, auf das erste Kommunikationssystem zuzugreifen;
Senden (S704), durch die erste Netzwerkvorrichtung, einer Antwortnachricht, die der ersten Nachricht entspricht, an die Kommunikationsvorrichtung; und
Senden (S705), durch die erste Netzwerkvorrichtung, einer zweiten Nachricht an die Kommunikationsvorrichtung, wobei die zweite Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten,
**dadurch gekennzeichnet, dass** der zweite Zugriffsparameter Frequenzbandinformationen des zweiten Kommunikationssystems und/oder Frequenzinformationen des zweiten Kommunikationssystems umfasst und ferner mindestens eines im folgenden Parametersatz umfasst: Zellidentitätsinformationen des zweiten Kommunikationssystems, Informationen, die dazu verwendet werden, anzugeben, ob eine zweite Netzwerkvorrichtung in dem zweiten Kommunikationssystem und die erste Netzwerkvorrichtung in dem ersten Kommunikationssystem zusammen angeordnet sind, Informationen, die dazu verwendet werden, anzugeben, ob die Zellidentitätsinformationen des zweiten Kommunikationssystems die gleichen wie Zellidentitätsinformationen des ersten Kommunikationssystems sind, Konfigurationsinformationen eines Direktzugriffskanals des zweiten Kommunikationssystems, Informationen über einen Rahmennummernversatz zwischen dem zweiten Kommunikationssystem und dem ersten Kommunikationssystem, Informationen über einen Teilrahmennummernversatz zwischen dem zweiten Kommunikationssystem und dem ersten Kommunikationssystem und Informationen über einen Schlitzversatz zwischen dem zweiten Kommunikationssystem und dem ersten Kommunikationssystem; und
dass, falls das zweite Kommunikationssystem ein New-Radio-Kommunikationssystem, NR-Kommunikationssystem, ist, der Parametersatz ferner Konfigurationsinformationen verbleibender Mindestsysteminformationen, RMSI, umfasst; oder
falls das zweite Kommunikationssystem ein Schmalband-Internetder-Dinge-Kommunikationssystem, NB-IoT-Kommunikationssystem, oder ein Enhanced-Machine-Type-Communication-System, eMTC-System, ist, der Parametersatz ferner Betriebsmodusinformationen des zweiten Kommunikationssystems umfasst, wobei die Betriebsmodusinformationen des zweiten Kommunikationssystems Informationen zu mindestens einem eines eigenständigen Betriebsmodus, eines Schutzbandbetriebsmodus oder eines Innenbandbetriebsmodus umfassen.

4. Kommunikationsvorrichtung, umfassend:
ein Empfangsmodul, das dazu konfiguriert ist, von einer ersten Netzwerkvorrichtung in einem ersten Kommunikationssystem, einen ersten Zugriffsparameter, der dazu verwendet wird, auf das erste Kommunikationssystem zuzugreifen, und einen zweiten Zugriffsparameter, der dazu verwendet wird, auf ein zweites Kommunikationssystem zuzugreifen, zu empfangen, wobei sich eine Systembandbreite des ersten Kommunikationssystems von einer Systembandbreite des zweiten Kommunikationssystems unterscheidet; und
ein Verarbeitungsmodul, das dazu konfiguriert ist, basierend auf dem zweiten Zugriffsparameter bei Erfüllen einer Umschaltbedingung zum Umschalten von dem ersten Kommunikationssystem auf das zweite Kommunikationssystem von dem ersten Kommunikationssystem auf das zweite Kommunikationssystem umzuschalten,
**dadurch gekennzeichnet, dass** der zweite Zugriffsparameter Frequenzbandinformationen des zweiten Kommunikationssystems und/oder Frequenzinformationen des zweiten Kommunikationssystems umfasst und ferner mindestens eines im folgenden Parametersatz umfasst: Zellidentitätsinformationen des zweiten Kommunikationssystems, Informationen, die dazu verwendet werden, anzugeben, ob eine zweite Netzwerkvorrichtung in dem zweiten Kommunikationssystem und die erste Netzwerkvorrichtung in dem ersten Kommunikationssystem zusammen angeordnet sind, Informationen, die dazu verwendet werden, anzugeben, ob die Zellidentitätsinformationen des zweiten Kommunikationssystems die gleichen wie Zellidentitätsinformationen des ersten Kommunikationssystems sind, Konfigurationsinformationen eines Direktzugriffskanals des zweiten Kommunikationssystems, Informationen über einen Rahmennummernversatz zwischen dem zweiten Kommunikationssystem und dem ersten Kommunikationssystem, Informationen über einen Teilrahmennummernversatz zwischen dem zweiten Kommunikationssystem und dem ersten Kommunikationssystem und Informationen über einen Schlitzversatz zwischen dem zweiten Kommunikationssystem und dem ersten Kommunikationssystem; und
dass, falls das zweite Kommunikationssystem ein New-Radio-Kommunikationssystem, NR-Kommunikationssystem, ist, der Parametersatz ferner Konfigurationsinformationen verbleibender Mindestsysteminformationen, RMSI, umfasst; oder
falls das zweite Kommunikationssystem ein Schmalband-Internetder-Dinge-Kommunikationssystem, NB-IoT-Kommunikationssystem, oder ein Enhanced-Machine-Type-Communication-System, eMTC-System, ist, der Parametersatz ferner Betriebsmodusinformationen des zweiten Kommunikationssystems umfasst, wobei die Betriebsmodusinformationen des zweiten Kommunikationssystems Informationen zu mindestens einem eines eigenständigen Betriebsmodus, eines Schutzbandbetriebsmodus oder eines Innenbandbetriebsmodus umfassen.

5. Kommunikationsvorrichtung nach Anspruch 4, wobei die Systembandbreite des ersten Kommunikationssystems größer als die Systembandbreite des zweiten Kommunikationssystems ist und die Umschaltbedingung zum Umschalten von dem ersten Kommunikationssystem auf das zweite Kommunikationssystem mindestens eine der folgenden Bedingungen umfasst:
ein Kanalqualitätsmesswert der Kommunikationsvorrichtung in dem ersten Kommunikationssystem ist kleiner als ein erster voreingestellter Schwellenwert;
die Kommunikationsvorrichtung detektiert in dem ersten Kommunikationssystem, dass ein Funkverknüpfungsfehler auftritt; die Kommunikationsvorrichtung erlangt innerhalb einer voreingestellten Dauer keine Downlink-Steuerinformationen mittels Überwachung; und
die Kommunikationsvorrichtung empfängt eine erste Nachricht, die durch die erste Netzwerkvorrichtung in dem ersten Kommunikationssystem gesendet wird, wobei die erste Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten; oder
wobei die Systembandbreite des ersten Kommunikationssystems kleiner als die Systembandbreite des zweiten Kommunikationssystems ist und die Umschaltbedingung zum Umschalten von dem ersten Kommunikationssystem auf das zweite Kommunikationssystem mindestens eine der folgenden Bedingungen umfasst:
ein Kanalqualitätsmesswert der Kommunikationsvorrichtung in dem ersten Kommunikationssystem ist größer als oder gleich einem zweiten voreingestellten Schwellenwert;
ein Abdeckungsgrad der Kommunikationsvorrichtung in dem ersten Kommunikationssystem ist ein voreingestellter Abdeckungsgrad;
ein Abdeckungsverbesserungsmodus der Kommunikationsvorrichtung in dem ersten Kommunikationssystem ist ein voreingestellter Abdeckungsverbesserungsmodus; und
die Kommunikationsvorrichtung empfängt eine zweite Nachricht, die durch die erste Netzwerkvorrichtung in dem ersten Kommunikationssystem gesendet wird, wobei die zweite Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten.

6. Netzwerkvorrichtung, umfassend:
ein Verarbeitungsmodul, das dazu konfiguriert ist, einen ersten Zugriffsparameter, der dazu verwendet wird, auf ein erstes Kommunikationssystem zuzugreifen, und einen zweiten Zugriffsparameter, der dazu verwendet wird, auf ein zweites Kommunikationssystem zuzugreifen, zu bestimmen, wobei sich eine Systembandbreite des ersten Kommunikationssystems von einer Systembandbreite des zweiten Kommunikationssystems unterscheidet;
ein Sendemodul, das dazu konfiguriert ist, den ersten Zugriffsparameter und den zweiten Zugriffsparameter an eine Kommunikationsvorrichtung zu senden; und
ein Empfangsmodul, das dazu konfiguriert ist, von der Kommunikationsvorrichtung eine erste Nachricht zu empfangen, die dazu verwendet wird, auf das erste Kommunikationssystem zuzugreifen, wobei
das Sendemodul ferner dazu konfiguriert ist, eine Antwortnachricht, die der ersten Nachricht entspricht, an die Kommunikationsvorrichtung zu senden; und
das Sendemodul ferner dazu konfiguriert ist, eine zweite Nachricht an die Kommunikationsvorrichtung zu senden, wobei die zweite Nachricht Angabeinformationen enthält und die Angabeinformationen dazu verwendet werden, der Kommunikationsvorrichtung anzugeben, von dem ersten Kommunikationssystem auf das zweite Kommunikationssystem umzuschalten,
**dadurch gekennzeichnet, dass** der zweite Zugriffsparameter Frequenzbandinformationen des zweiten Kommunikationssystems und/oder Frequenzinformationen des zweiten Kommunikationssystems umfasst und ferner mindestens eines im folgenden Parametersatz umfasst: Zellidentitätsinformationen des zweiten Kommunikationssystems, Informationen, die dazu verwendet werden, anzugeben, ob eine zweite Netzwerkvorrichtung in dem zweiten Kommunikationssystem und die erste Netzwerkvorrichtung in dem ersten Kommunikationssystem zusammen angeordnet sind, Informationen, die dazu verwendet werden, anzugeben, ob die Zellidentitätsinformationen des zweiten Kommunikationssystems die gleichen wie Zellidentitätsinformationen des ersten Kommunikationssystems sind, Konfigurationsinformationen eines Direktzugriffskanals des zweiten Kommunikationssystems, Informationen über einen Rahmennummernversatz zwischen dem zweiten Kommunikationssystem und dem ersten Kommunikationssystem, Informationen über einen Teilrahmennummernversatz zwischen dem zweiten Kommunikationssystem und dem ersten Kommunikationssystem und Informationen über einen Schlitzversatz zwischen dem zweiten Kommunikationssystem und dem ersten Kommunikationssystem; und
dass, falls das zweite Kommunikationssystem ein New-Radio-Kommunikationssystem, NR-Kommunikationssystem, ist, der Parametersatz ferner Konfigurationsinformationen verbleibender Mindestsysteminformationen, RMSI, umfasst; oder
falls das zweite Kommunikationssystem ein Schmalband-Internetder-Dinge-Kommunikationssystem, NB-IoT-Kommunikationssystem, oder ein Enhanced-Machine-Type-Communication-System, eMTC-System, ist, der Parametersatz ferner Betriebsmodusinformationen des zweiten Kommunikationssystems umfasst, wobei die Betriebsmodusinformationen des zweiten Kommunikationssystems Informationen zu mindestens einem eines eigenständigen Betriebsmodus, eines Schutzbandbetriebsmodus oder eines Innenbandbetriebsmodus umfassen.

7. Speichermedium, das computerausführbare Anweisungen speichert, um die Kommunikationsvorrichtung nach Anspruch 4 dazu zu veranlassen, die Schritte des Verfahrens nach Anspruch 1 auszuführen.

8. Speichermedium, das computerausführbare Anweisungen speichert, um die Kommunikationsvorrichtung nach Anspruch 6 dazu zu veranlassen, die Schritte des Verfahrens nach Anspruch 3 auszuführen.

## Revendications

1. Procédé de communication, comprenant :
la réception (S401), par un dispositif de communication en provenance d'un premier dispositif de réseau dans un premier système de communication, d'un premier paramètre d'accès utilisé pour accéder au premier système de communication et d'un second paramètre d'accès utilisé pour accéder à un second système de communication, dans lequel une bande passante système du premier système de communication est différente d'une bande passante système du second système de communication ; et
la commutation (S403), par le dispositif de communication, du premier système de communication au second système de communication sur la base du second paramètre d'accès lorsqu'une condition de commutation de la commutation du premier système de communication au second système de communication est satisfaite,
**caractérisé en ce que** le second paramètre d'accès comprend des informations de bande de fréquence du second système de communication et/ou des informations de fréquence du second système de communication, et comprend également au moins un paramètre parmi l'ensemble de paramètres suivant : des informations d'identité de cellule du second système de communication, des informations utilisées pour indiquer si un second dispositif de réseau du second système de communication et le premier dispositif de réseau du premier système de communication sont co-implantés, des informations utilisées pour indiquer si les informations d'identité de cellule du second système de communication sont identiques aux informations d'identité de cellule du premier système de communication, des informations de configuration d'un canal d'accès aléatoire du second système de communication, des informations sur un décalage de numéro de trame entre le second système de communication et le premier système de communication, des informations sur un décalage de numéro de sous-trame entre le second système de communication et le premier système de communication, et des informations sur un décalage d'intervalle entre le second système de communication et le premier système de communication ; et
le fait que si le second système de communication est un nouveau système de communication radio NR, l'ensemble de paramètres comprend également des informations de configuration des informations système minimales restantes RMSI ; ou
si le second système de communication est un système de communication de l'Internet des objets à bande étroite NB-IoT ou un système de communication de type machine amélioré eMTC, l'ensemble de paramètres comprend également des informations sur le mode de fonctionnement du second système de communication, dans lequel les informations sur le mode de fonctionnement du second système de communication comprennent des informations sur au moins l'un d'un mode de fonctionnement autonome, d'un mode de fonctionnement en bande de garde ou d'un mode de fonctionnement en bande.

2. Procédé selon la revendication 1, dans lequel la bande passante système du premier système de communication est supérieure à la bande passante système du second système de communication, et la condition de commutation de la commutation du premier système de communication au second système de communication comprend au moins l'une des conditions suivantes :
une valeur de mesure de qualité de canal du dispositif de communication dans le premier système de communication est inférieure à un premier seuil prédéfini ;
le dispositif de communication détecte, dans le premier système de communication, qu'une panne de liaison radio se produit ;
le dispositif de communication n'obtient aucune information de commande de liaison descendante par surveillance dans une durée prédéfinie ; et
le dispositif de communication reçoit un premier message envoyé par le premier dispositif de réseau dans le premier système de communication, dans lequel le premier message comprend des informations d'indication, et les informations d'indication sont utilisées pour indiquer au dispositif de communication de commuter du premier système de communication au second système de communication ; ou
dans lequel la bande passante système du premier système de communication est inférieure à la bande passante système du second système de communication, et la condition de commutation de la commutation du premier système de communication au second système de communication comprend au moins l'une des conditions suivantes :
une valeur de mesure de qualité de canal du dispositif de communication dans le premier système de communication est supérieure ou égale à un second seuil prédéfini ;
un niveau de couverture du dispositif de communication dans le premier système de communication est un niveau de couverture prédéfini ;
un mode d'amélioration de couverture du dispositif de communication dans le premier système de communication est un mode d'amélioration de couverture prédéfini ; et
le dispositif de communication reçoit un second message envoyé par le premier dispositif de réseau dans le premier système de communication, dans lequel le second message comprend des informations d'indication, et les informations d'indication sont utilisées pour indiquer au dispositif de communication de commuter du premier système de communication au second système de communication.

3. Procédé de communication, comprenant :
la détermination (S701), par un premier dispositif de réseau dans un premier système de communication, d'un premier paramètre d'accès utilisé pour accéder au premier système de communication et d'un second paramètre d'accès utilisé pour accéder à un second système de communication, dans lequel une bande passante système du premier système de communication est différente d'une bande passante système du second système de communication ;
l'envoi (S702), par le premier dispositif de réseau, du premier paramètre d'accès et du second paramètre d'accès à un dispositif de communication ;
la réception (S703), par le premier dispositif de réseau en provenance du dispositif de communication, d'un premier message utilisé pour accéder au premier système de communication ;
l'envoi (S704), par le premier dispositif de réseau, d'un message de réponse correspondant au premier message au dispositif de communication ; et
l'envoi (S705), par le premier dispositif de réseau, d'un second message au dispositif de communication, dans lequel le second message comprend des informations d'indication, et les informations d'indication sont utilisées pour indiquer au dispositif de communication de commuter du premier système de communication au second système de communication,
**caractérisé en ce que** le second paramètre d'accès comprend des informations de bande de fréquence du second système de communication et/ou des informations de fréquence du second système de communication, et comprend également au moins un paramètre parmi l'ensemble de paramètres suivant : des informations d'identité de cellule du second système de communication, des informations utilisées pour indiquer si un second dispositif de réseau du second système de communication et le premier dispositif de réseau du premier système de communication sont co-implantés, des informations utilisées pour indiquer si les informations d'identité de cellule du second système de communication sont identiques aux informations d'identité de cellule du premier système de communication, des informations de configuration d'un canal d'accès aléatoire du second système de communication, des informations sur un décalage de numéro de trame entre le second système de communication et le premier système de communication, des informations sur un décalage de numéro de sous-trame entre le second système de communication et le premier système de communication, et des informations sur un décalage d'intervalle entre le second système de communication et le premier système de communication ; et
le fait que si le second système de communication est un nouveau système de communication radio NR, l'ensemble de paramètres comprend également des informations de configuration des informations système minimales restantes RMSI ; ou
si le second système de communication est un système de communication de l'Internet des objets à bande étroite NB-IoT ou un système de communication de type machine amélioré eMTC, l'ensemble de paramètres comprend également des informations sur le mode de fonctionnement du second système de communication, dans lequel les informations sur le mode de fonctionnement du second système de communication comprennent des informations sur au moins l'un d'un mode de fonctionnement autonome, d'un mode de fonctionnement en bande de garde ou d'un mode de fonctionnement en bande.

4. Dispositif de communication, comprenant :
un module de réception, configuré pour recevoir, en provenance d'un premier dispositif de réseau dans un premier système de communication, un premier paramètre d'accès utilisé pour accéder au premier système de communication et un second paramètre d'accès utilisé pour accéder à un second système de communication, dans lequel une bande passante système du premier système de communication est différente d'une bande passante système du second système de communication ; et
un module de traitement, configuré pour commuter du premier système de communication au second système de communication sur la base du second paramètre d'accès lorsqu'une condition de commutation de la commutation du premier système de communication au second système de communication est satisfaite,
**caractérisé en ce que** le second paramètre d'accès comprend des informations de bande de fréquence du second système de communication et/ou des informations de fréquence du second système de communication, et comprend également au moins un paramètre parmi l'ensemble de paramètres suivant : des informations d'identité de cellule du second système de communication, des informations utilisées pour indiquer si un second dispositif de réseau du second système de communication et le premier dispositif de réseau du premier système de communication sont co-implantés, des informations utilisées pour indiquer si les informations d'identité de cellule du second système de communication sont identiques aux informations d'identité de cellule du premier système de communication, des informations de configuration d'un canal d'accès aléatoire du second système de communication, des informations sur un décalage de numéro de trame entre le second système de communication et le premier système de communication, des informations sur un décalage de numéro de sous-trame entre le second système de communication et le premier système de communication, et des informations sur un décalage d'intervalle entre le second système de communication et le premier système de communication ; et
le fait que si le second système de communication est un nouveau système de communication radio NR, l'ensemble de paramètres comprend également des informations de configuration des informations système minimales restantes RMSI ; ou
si le second système de communication est un système de communication de l'Internet des objets à bande étroite NB-IoT ou un système de communication de type machine amélioré eMTC, l'ensemble de paramètres comprend également des informations sur le mode de fonctionnement du second système de communication, dans lequel les informations sur le mode de fonctionnement du second système de communication comprennent des informations sur au moins l'un d'un mode de fonctionnement autonome, d'un mode de fonctionnement en bande de garde ou d'un mode de fonctionnement en bande.

5. Dispositif de communication selon la revendication 4, dans lequel la bande passante système du premier système de communication est supérieure à la bande passante système du second système de communication, et la condition de commutation de la commutation du premier système de communication au second système de communication comprend au moins l'une des conditions suivantes :
une valeur de mesure de qualité de canal du dispositif de communication dans le premier système de communication est inférieure à un premier seuil prédéfini ;
le dispositif de communication détecte, dans le premier système de communication, qu'une panne de liaison radio se produit ;
le dispositif de communication n'obtient aucune information de commande de liaison descendante par surveillance dans une durée prédéfinie ; et
le dispositif de communication reçoit un premier message envoyé par le premier dispositif de réseau dans le premier système de communication, dans lequel le premier message comprend des informations d'indication, et les informations d'indication sont utilisées pour indiquer au dispositif de communication de commuter du premier système de communication au second système de communication ; ou
dans lequel la bande passante système du premier système de communication est inférieure à la bande passante système du second système de communication, et la condition de commutation de la commutation du premier système de communication au second système de communication comprend au moins l'une des conditions suivantes :
une valeur de mesure de qualité de canal du dispositif de communication dans le premier système de communication est supérieure ou égale à un second seuil prédéfini ;
un niveau de couverture du dispositif de communication dans le premier système de communication est un niveau de couverture prédéfini ;
un mode d'amélioration de couverture du dispositif de communication dans le premier système de communication est un mode d'amélioration de couverture prédéfini ; et
le dispositif de communication reçoit un second message envoyé par le premier dispositif de réseau dans le premier système de communication, dans lequel le second message comprend des informations d'indication, et les informations d'indication sont utilisées pour indiquer au dispositif de communication de commuter du premier système de communication au second système de communication.

6. Dispositif de réseau, comprenant :
un module de traitement, configuré pour déterminer un premier paramètre d'accès utilisé pour accéder à un premier système de communication et un second paramètre d'accès utilisé pour accéder à un second système de communication, dans lequel une bande passante système du premier système de communication est différente d'une bande passante système du second système de communication ;
un module d'envoi, configuré pour envoyer le premier paramètre d'accès et le second paramètre d'accès à un dispositif de communication ; et
un module de réception, configuré pour recevoir, en provenance du dispositif de communication, un premier message utilisé pour accéder au premier système de communication, dans lequel le module d'envoi est également configuré pour envoyer un message de réponse correspondant au premier message au dispositif de communication ; et
le module d'envoi est également configuré pour envoyer un second message au dispositif de communication, dans lequel le second message comprend des informations d'indication, et les informations d'indication sont utilisées pour indiquer au dispositif de communication de commuter du premier système de communication au second système de communication,
**caractérisé en ce que** le second paramètre d'accès comprend des informations de bande de fréquence du second système de communication et/ou des informations de fréquence du second système de communication, et comprend également au moins un paramètre parmi l'ensemble de paramètres suivant : des informations d'identité de cellule du second système de communication, des informations utilisées pour indiquer si un second dispositif de réseau du second système de communication et le premier dispositif de réseau du premier système de communication sont co-implantés, des informations utilisées pour indiquer si les informations d'identité de cellule du second système de communication sont identiques aux informations d'identité de cellule du premier système de communication, des informations de configuration d'un canal d'accès aléatoire du second système de communication, des informations sur un décalage de numéro de trame entre le second système de communication et le premier système de communication, des informations sur un décalage de numéro de sous-trame entre le second système de communication et le premier système de communication, et des informations sur un décalage d'intervalle entre le second système de communication et le premier système de communication ; et
le fait que si le second système de communication est un nouveau système de communication radio NR, l'ensemble de paramètres comprend également des informations de configuration des informations système minimales restantes RMSI ; ou
si le second système de communication est un système de communication de l'Internet des objets à bande étroite NB-IoT ou un système de communication de type machine amélioré eMTC, l'ensemble de paramètres comprend également des informations sur le mode de fonctionnement du second système de communication, dans lequel les informations sur le mode de fonctionnement du second système de communication comprennent des informations sur au moins l'un d'un mode de fonctionnement autonome, d'un mode de fonctionnement en bande de garde ou d'un mode de fonctionnement en bande.

7. Support de stockage, stockant des instructions exécutables par ordinateur pour amener le dispositif de communication selon la revendication 4 à exécuter les étapes du procédé selon la revendication 1.

8. Support de stockage, stockant des instructions exécutables par ordinateur pour amener le dispositif de communication selon la revendication 6 à exécuter les étapes du procédé selon la revendication 3.
